(19) Europäisches Patentamt

European Patent Office

Office européen des brevets

(11) **EP 1 144 096 B1**

(12) **EUROPÄISCHE PATENTSCHRIFT**

(45) Veröffentlichungstag und Bekanntmachung des Hinweises auf die Patenterteilung:
**01.10.2003 Patentblatt 2003/40**

(21) Anmeldenummer: **00904934.7**

(22) Anmeldetag: **19.01.2000**

(51) Int Cl.⁷: **B01D 67/00**, B01D 69/02, B01D 69/08, B01D 71/26, C08J 9/28

(86) Internationale Anmeldenummer:
**PCT/EP00/00393**

(87) Internationale Veröffentlichungsnummer:
**WO 00/043114 (27.07.2000 Gazette 2000/30)**

(54) **INTEGRAL ASYMMETRISCHE POLYOLEFINMEMBRAN**

INTEGRALLY ASYMMETRICAL POLYOLEFIN MEMBRANE

MEMBRANE POLYOLEFINIQUE INTEGRALEMENT ASYMETRIQUE

(84) Benannte Vertragsstaaten:
**AT BE CH CY DE DK ES FI FR GB GR IE IT LI LU MC NL PT SE**

(30) Priorität: **21.01.1999 DE 19901999**

(43) Veröffentlichungstag der Anmeldung:
**17.10.2001 Patentblatt 2001/42**

(73) Patentinhaber: **Membrana GmbH**
**42201 Wuppertal (DE)**

(72) Erfinder:
• **KESSLER, Erich**
**D-64739 Höchst i. Odw. (DE)**
• **BATZILLA, Thomas**
**D-63927 Bürgstadt (DE)**
• **WECHS, Friedbert**
**D-63939 Wörth (DE)**
• **WIESE, Frank**
**D-42289 Wuppertal (DE)**

(74) Vertreter: **Fett, Günter**
**CPW GmbH**
**Kasinostrasse 19-21**
**42103 Wuppertal (DE)**

(56) Entgegenhaltungen:
**EP-A- 0 299 381     WO-A-99/04891**
**DE-A- 3 205 289     DE-A- 4 226 205**
**US-A- 4 247 498**

**Beschreibung**

Die Erfindung betrifft ein Verfahren zur Herstellung einer hydrophoben Membran über einen thermisch induzierten Phasenseparationsprozess gemäß Oberbegriff des Anspruchs 1, wobei die Membran eine schwammartige, offenporige mikroporöse Struktur enthält. Die Erfindung betrifft des Weiteren eine hydrophobe integral asymmetrische Membran, welche insbesondere zum Gasaustausch geeignet ist, die hauptsächlich aus mindestens einem Polymer, ausgewählt aus der Gruppe der Polyolefine, zusammengesetzt ist und eine erste und eine zweite Oberfläche aufweist, wobei die Membran eine Stützschicht mit schwammartiger, offenporiger mikroporöser Struktur besitzt und zu dieser Stützschicht benachbart an mindestens einer ihrer Oberflächen eine Trennschicht mit dichterer Struktur, sowie die Verwendung solcher Membranen zur Blutoxygenation.

In einer Vielzahl von Anwendungen aus den Bereichen der Chemie, Biochemie oder der Medizin stellt sich das Problem, gasförmige Komponenten aus Flüssigkeiten abzutrennen oder solche Komponenten den Flüssigkeiten hinzuzufügen. Für derartige Gasaustauschprozesse werden in zunehmendem Maße Membranen eingesetzt, die als Trennmembran zwischen der jeweiligen Flüssigkeit, von der eine gasförmige Komponente abgetrennt bzw. zu der eine gasförmige Komponente hinzugefügt werden soll, und einem diese gasförmige Komponente aufnehmenden oder abgebenden Fluid dient. Hierbei kann das Fluid sowohl ein Gas sein oder auch eine Flüssigkeit, die die auszutauschende Gaskomponente enthält bzw. aufnehmen kann. Mittels derartiger Membranen kann eine große Austauschfläche für den Gasaustausch bereitgestellt werden und - wenn dies erforderlich ist - ein direkter Kontakt zwischen Flüssigkeit und Fluid vermieden werden.

Eine wichtige Anwendung membranbasierter Gasaustauschprozesse im medizinischen Bereich sind Oxygenatoren, auch künstliche Lungen genannt. Bei diesen Oxygenatoren, die z.B. bei Operationen am offenen Herzen eingesetzt werden, erfolgt eine Oxygenation von Blut und eine Entfernung von Kohlendioxid aus dem Blut. In der Regel werden bei derartigen Oxygenatoren Bündel aus Hohlfasermembranen eingesetzt. Venöses Blut strömt dabei im Außenraum um die Hohlfasermembranen, während durch das Lumen der Hohlfasermembranen Luft, mit Sauerstoff angereicherte Luft oder auch reiner Sauerstoff, d.h. ein Gas geführt wird. Über die Membranen besteht ein Kontakt zwischen Blut und Gas, wodurch ein Transport von Sauerstoff in das Blut und gleichzeitig ein Transport von Kohlendioxid aus dem Blut in das Gas erfolgen kann.

Um das Blut ausreichend mit Sauerstoff zu versorgen und gleichzeitig Kohlendioxid in ausreichendem Maße aus dem Blut entfernen zu können, müssen die Membranen einen hohen Gastransport gewährleisten: Es muß eine ausreichende Menge Sauerstoff von der Gasseite der Membran zur Blutseite und umgekehrt eine ausreichende Menge Kohlendioxid von der Blutseite der Membran zur Gasseite transferiert werden, d.h. die Gasflüsse bzw. die Gastransferraten, ausgedrückt als das Volumen eines Gases, das pro Zeiteinheit und Membranfläche von einer Membranseite auf die andere transportiert wird, müssen groß sein. Einen entscheidenden Einfluß auf die Transferraten besitzt die Porosität der Membran, da nur bei ausreichend hoher Porosität ausreichende Transferraten erzielt werden können.

Es befinden sich eine Reihe von Oxygenatoren im Einsatz, die Hohlfasermembranen mit offenporiger mikroporöser Struktur enthalten. Eine Möglichkeit, derartige Membranen für den Gasaustausch d.h. z.B. für die Oxygenation herzustellen, wird in der DE-A-28 33 493 beschrieben. Mit dem Verfahren gemäß dieser Schrift lassen sich Membranen aus schmelzflüssigen thermoplastischen Polymeren mit bis zu 90 Vol.-% miteinander in Verbindung stehenden Poren herstellen. Das Verfahren basiert auf einem thermisch induzierten Phasenseparationsprozess mit flüssig-flüssig-Phasenseparation. Bei diesem Prozeß wird zunächst eine homogene einphasige Schmelzemischung aus dem thermoplastischen Polymer und einer kompatiblen Komponente, die mit dem Polymer ein binäres System ausbildet, das im flüssigen Aggregatzustand einen Bereich völliger Mischbarkeit und einen Bereich mit Mischungslücke aufweist, hergestellt und diese Schmelzemischung dann in ein Bad extrudiert, das gegenüber dem Polymer im wesentlichen inert ist, d.h. im wesentlichen chemisch nicht mit ihm reagiert, und eine Temperatur unterhalb der Entmischungstemperatur besitzt. Hierdurch wird eine flüssig-flüssig-Phasentrennung eingeleitet und bei weiterer Abkühlung das thermoplastische Polymer zur Membranstruktur verfestigt.

Ein verbessertes Verfahren zur Herstellung derartiger Membranen, das eine gezielte Einstellung von Porenvolumen, Porengröße und Porenwandung erlaubt, wird in der DE-A-32 05 289 offenbart: Bei diesem Verfahren werden 5-90 Gew.-% eines Polymeren durch Erwärmen über die kritische Entmischungstemperatur in 10-95 Gew.-% eines Lösemittelsystems aus einer ersten und einer zweiten Verbindung, die bei der Lösetemperatur flüssig und miteinander mischbar sind zu einer homogenen Lösung gelöst, wobei das eingesetzte Gemisch aus dem Polymer und den genannten Verbindungen im flüssigen Aggregatzustand unterhalb der kritischen Entmischungstemperatur eine Mischungslücke aufweist, die erste Verbindung ein Löser für das Polymer ist und die zweite Verbindung die Phasentrennungstemperatur einer Lösung, bestehend aus dem Polymer und der ersten Verbindung, heraufsetzt. Die Lösung wird ausgeformt, durch Abkühlung im einem Abkühlmedium aus der ersten Verbindung oder aus dem eingesetzten Lösemittelsystem zur Entmischung und Erstarrung der polymerreichen Phase gebracht, und anschließend werden die genannten Verbindungen extrahiert.

Die gemäß DE-A-28 33 493 oder DE-A-32 05 289 offenbarten Membranen weisen eine offenporige mikroporöse Struktur und auch offenporige mikroporöse Oberflächen auf. Dies hat zwar auf der einen Seite zur Folge, dass gasförmige Stoffe, also beispielsweise Sauerstoff ($O_2$) oder Kohlendioxid ($CO_2$), relativ ungehindert durch die Membran hindurchtreten können und der Transport eines Gases als "Knudsen Fluss" erfolgt, verbunden mit relativ hohen Transferraten für Gase bzw. hohen Gasflüssen durch die Membran. So weisen derartige Membranen mit Gasflüssen für $CO_2$ von größer 5 ml/(cm$^{2*}$min$^*$bar) und Gasflüssen für $O_2$ in etwa der gleichen Größe Gasflüsse auf, die für eine Oxygenation von Blut ausreichend groß sind.

Auf der anderen Seite jedoch kann bei längerem Einsatz dieser Membranen bei der Blutoxygenation oder allgemein bei Gasaustauschprozessen mit wässrigen Flüssigkeiten, auch wenn in diesen Fällen die Membranen aus hydrophoben Polymeren und insbesondere aus Polyolefinen hergestellt sind, Blutplasma bzw. ein Teil der Flüssigkeit in die Membran eindringen und im Extremfall auf der Gasseite der Membran austreten. Dies hat einen drastischen Abfall der Gastransferraten zur Folge. Bei Anwendungen im medizinischen Bereich der Blutoxygenation wird dies als Plasmadurchbruch bezeichnet.

Die Plasmadurchbruchzeit derartiger Membranen, wie sie gemäß DE-A-28 33 493 oder DE-A-32 05 289 herstellbar sind, reicht zwar in den meisten Fällen der konventionellen Blutoxygenation aus, um einen Patienten bei einer normalen Operation am offenen Herzen zu oxygenieren. Jedoch besteht der Wunsch nach Membranen mit höherer Plasmadurchbruchzeit, um höhere Sicherheiten bei länger andauernden Herzoperationen zu erlangen und einen Plasmadurchbruch auszuschließen, der einen sofortigen Austausch des Oxygenators erforderlich machen würde. Ziel ist aber auch, beispielsweise Frühgeburten oder allgemein Patienten mit temporär eingeschränkter Lungenfunktion solange oxygenieren zu können, bis die Lungenfunktion wiederhergestellt ist, d.h. also Langzeitoxygenationen durchführen zu können. Hierfür sind entsprechend lange Plasmadurchbruchzeiten Voraussetzung. Ein in diesem Zusammenhang häufig geforderter Mindestwert für die Plasmadurchbruchzeit liegt bei 20 Stunden.

Aus der EP-A-299 381 sind Hohlfasermembranen zur Oxygenation bekannt, die Plasmadurchbruchzeiten von länger als 20 Stunden aufweisen, d.h. auch bei langandauerndem Einsatz keinen Plasmadurchbruch zeigen. Dies wird bei der ansonsten porösen Membran durch eine Sperrschicht erreicht, die eine aus dem Sauerstofffluss und dem Stickstofffluss errechnete mittlere Dicke von nicht mehr als 2 um aufweist und im wesentlichen für Ethanol undurchlässig ist. Die Membran ist im wesentlichen frei von offenen Poren, d.h. von Poren, die sowohl zur Außenseite als auch zur Innenseite der Hohlfasermembran geöffnet sind. Die Membranen gemäß EP-A-299 381 weisen entsprechend den offenbarten Beispielen eine Porosität von maximal 31 Vol.-% auf, da bei höheren Porositäten die Poren miteinander verbunden sind und eine Kommunikation zwischen den Seiten der Hohlfasermembranen erfolgt, was einen Plasmadurchbruch zur Folge hat. In der Sperrschicht erfolgt der Transport der auszutauschenden Gase über Lösungsdiffusion.

Die Herstellung dieser Membranen erfolgt über ein Schmelz-Streckverfahren, d.h. das Polymer wird zunächst zu einer Hohlfaser schmelzextrudiert und anschließend warm- und kaltverstreckt. Hierbei werden nur relativ niedrige Porositäten erhalten, wodurch in Verbindung mit dem in der Sperrschicht auftretenden Transport über Lösungsdiffusion auch die erzielbaren Transferraten für Sauerstoff und Kohlendioxid relativ gering bleiben. Darüber hinaus weisen die Hohlfasermembranen gemäß EP-A-299 381 aufgrund der mit der Herstellung verbundenen starken Verstreckung zwar eine ausreichende Festigkeit, jedoch nur eine geringe Bruchdehnung auf. In nachfolgenden textilen Verarbeitungsschritten z.B. zur Herstellung von Hohlfasermatten, die sich für die Herstellung von Oxygenatoren mit guter Austauschleistung bestens bewährt haben und wie sie beispielsweise in der EP-A-285 812 beschrieben werden, lassen sich daher diese Hohlfasermembranen nur schlecht verarbeiten.

Typischerweise entstehen bei Schmelz-Streckverfahren Membranen mit schlitzförmigen Poren mit ausgeprägter Anisotropie, deren eine Haupterstreckung senkrecht zur Streckrichtung und deren zweite Haupterstreckung senkrecht zur Membranoberfläche liegt, d.h. bei Hohlfasermembranen zwischen Membranaussenoberfläche und Membraninnenoberfläche verläuft. Hierdurch erstrecken sich durch die Poren ausgebildete Kanäle relativ geradlinig zwischen den Oberflächen. Im Falle, dass z.B. infolge mechanischer Beschädigungen beim Spinnprozeß Leckstellen in der Sperrschicht auftreten, existiert dann eine bevorzugte Richtung für den Fluß einer Flüssigkeit zwischen Innen- und Außenoberfläche oder umgekehrt, so dass dadurch ein Plasmadurchbruch begünstigt wird.

Es ist daher Aufgabe der Erfindung, ein vielseitig einsetzbares Verfahren zur Verfügung zu stellen, mittels dessen integral asymmetrische Membranen mit mikroporöser Stützstruktur und einer Trennschicht mit dichterer Struktur hergestellt werden können, die für den Gasaustausch geeignet sind, bei denen die Nachteile der Membranen des Stands der Technik zumindest reduziert sind, die eine hohe Gasaustauschleistung aufweisen, zumindest über lange Zeiträume dicht sind gegen einen Durchbruch von hydrophilen Flüssigkeiten, insbesondere von Blutplasma, d.h. insbesondere für die Langzeitoxygenation geeignet sind, und die gute Weiterverarbeitungseigenschaften aufweisen.

Es ist des Weiteren Aufgabe der Erfindung, Membranen insbesondere für den Gasaustausch zur Verfügung zu stellen, bei denen die Nachteile der Membranen des Stands der Technik zumindest reduziert sind, die eine hohe Gasaustauschleistung und für die Blutoxygenation ausreichend hohe Gasflüsse aufweisen, zumindest über lange Zeiträume dicht sind gegen einen Durchbruch von hydrophilen Flüssigkeiten, insbesondere von Blutplasma, und die gute Weiterverarbeitungseigenschaften aufweisen.

Die Aufgabe wird gelöst durch ein Verfahren zur Herstellung einer integral asymmetrischen hydrophoben Membran mit einer schwammartigen, offenporigen mikroporösen Stützstruktur und einer Trennschicht mit gegenüber der Stützstruktur dichterer Struktur, wobei das Verfahren mindestens die Schritte umfasst:

a) Herstellung einer homogenen Lösung von 20-90 Gew.-% einer Polymerkomponente aus mindestens einem Polymer, ausgewählt aus der Gruppe der Polyolefine, in 80-10 Gew.-% eines Lösemittelsystems, enthaltend eine Verbindung A und eine Verbindung B, welche bei der Lösetemperatur flüssig und miteinander mischbar sind, wobei das eingesetzte Gemisch aus Polymerkomponente, Verbindung A und Verbindung B eine kritische Entmischungstemperatur und eine Erstarrungstemperatur aufweist und unterhalb der kritischen Entmischungstemperatur im flüssigen Aggregatzustand eine Mischungslücke, und wobei als Verbindung A ein Löser für die Polymerkomponente ausgewählt wird und die Verbindung B die Entmischungstemperatur einer Lösung, bestehend aus der Polymerkomponente und der Verbindung A, heraufsetzt,

b) Ausformen der Lösung zu einem Formkörper mit einer ersten Oberfläche und einer zweiten Oberfläche in einem Formwerkzeug, welches eine Werkzeugtemperatur oberhalb der kritischen Entmischungstemperatur aufweist,

c) Abkühlung des Formkörpers mittels eines Abkühlmediums, welches auf eine Abkühltemperatur unterhalb der Erstarrungstemperatur temperiert ist, mit einer solchen Geschwindigkeit, dass eine thermodynamische Nichtgleichgewichts-flüssigflüssig-Phasentrennung in eine polymerreiche und eine polymerarme Phase und anschließend bei Unterschreiten der Erstarrungstemperatur Erstarrung der polymerreichen Phase erfolgt,

d) gegebenenfalls Entfernen der Verbindungen A und B aus dem Formkörper, dadurch gekennzeichnet, dass als Verbindung A ein starker Löser für die Polymerkomponente ausgewählt wird, für den die Entmischungstemperatur einer Lösung von 25 Gew.-% der Polymerkomponente in diesem Löser um mindestens 10% unter dem Schmelzpunkt der reinen Polymerkomponente liegt, dass als Verbindung B ein schwacher Nichtlöser für die Polymerkomponente ausgewählt wird, welcher die Polymerkomponente beim Erwärmen bis zu seinem Siedepunkt nicht zu einer homogenen Lösung auflöst und für den die Entmischungstemperatur eines Systems, bestehend aus 25 Gew.-% der Polymerkomponente, 10 Gew.-% des schwachen Nichtlösers und 65 Gew.-% der als Löser eingesetzten Verbindung A, um höchstens 8 % über der Entmischungstemperatur eines Systems aus 25 Gew.-% der Polymerkomponente und 75 Gew.-% der Verbindung A liegt, und dass der Formkörper zur Abkühlung mit einem flüssigen Abkühlmedium in Kontakt gebracht wird, welches ein Nichtlöser für die Polymerkomponente ist, der die Polymerkomponente bei Erwärmen bis zu seinem Siedepunkt nicht zu einer homogenen Lösung löst, und welches chemisch nicht mit der Polymerkomponente reagiert.

Überraschenderweise hat sich gezeigt, dass bei Einhaltung dieser Verfahrensbedingungen integral asymmetrische Membranen erhalten werden, bei denen mindestens eine Oberfläche als Trennschicht mit gegenüber der Stützschichtstruktur dichterer Struktur ausgebildet ist, die die daran angrenzende schwammartige, offenporige mikroporöse Stützschichtstruktur abdeckt. Mittels des erfindungsgemäßen Verfahrens lassen sich Trennschichten mit sehr dünnen Schichtdicken realisieren, deren Struktur bis hin zu einer nanoporösen Struktur mit Poren bis 100 nm oder auch zu einer dichten Struktur eingestellt werden kann. Gleichzeitig weist die Stützschicht der so hergestellten Membranen eine hohe Volumenporosität auf. Vorzugsweise werden mittels des erfindungsgemäßen Verfahrens integral asymmetrische Membranen mit einer dichten Trennschicht hergestellt. Unter einer dichten Trennschicht wird im Rahmen der vorliegenden Erfindung eine Trennschicht verstanden, für die bei rasterelektronenmikroskopischer Untersuchung der die Trennschicht aufweisenden Oberfläche der Membran mit 60000-facher Vergrößerung keine Poren erkennbar sind.

Das erfindungsgemäße Verfahren erlaubt also die Herstellung integral asymmetrischer Membranen, mit einer Trennschicht, die bewirkt, dass die Membranen gegenüber einem Flüssigkeitsdurchbruch über lange Zeiträume dicht, jedoch gleichzeitig gasdurchlässig sind, und mit einer Stützschicht mit hoher Volumenporosität, wodurch für diese Membranen in Gastransferprozessen gleichzeitig hohe Gastransferleistungen resultieren.

Die Aufgabe wird daher des Weiteren gelöst durch eine hydrophobe integral asymmetrische Membran insbesondere zum Gasaustausch, die im wesentlichen aus mindestens einem Polymer, ausgewählt aus der Gruppe der Polyolefine, zusammengesetzt ist und eine erste und eine zweite Oberfläche besitzt, wobei die Membran eine Stützschicht mit einer schwammartigen, offenporigen mikroporösen Struktur aufweist und zu dieser Stützschicht benachbart an mindestens einer ihrer Oberflächen eine Trennschicht mit dichterer Struktur, die dadurch gekennzeichnet ist, dass die Trennschicht höchstens Poren mit einem mittleren Durchmesser <100 nm aufweist, dass die Stützschicht frei von Makrovoids ist und die Poren in der Stützschicht im Mittel im wesentlichen isotrop sind, dass die Membran eine Porosität im Bereich von größer als 30 Vol.-% bis kleiner 75 Vol.-% und einen Gastrennfaktor $\alpha(CO_2/N_2)$ von mindestens 1 aufweist.

Diese Membranen lassen sich hervorragend zur Oxygenation von Blut einsetzen, wobei die Trennschicht dieser Membranen dafür verantwortlich zeichnet, dass diese Membranen über lange Zeiträume gegenüber dem Durchbruch von Blutplasma dicht sind.

Im Sinne der vorliegenden Erfindung wird unter einer integral asymmetrischen Membran eine Membran verstanden, bei der Trennschicht und Stützschicht aus dem gleichen Material bestehen sowie zusammen unmittelbar bei der Membranherstellung ausgebildet wurden, wodurch beide Schichten als integrale Einheit miteinander verbunden sind. Beim Übergang von der Trennschicht zur Stützschicht erfolgt allein eine Änderung in Bezug auf die Membranstruktur. Einen Gegensatz dazu bilden beispielsweise Composit-Membranen, die einen mehrschichtigen Aufbau aufweisen, indem auf einer porösen, oftmals mikroporösen Stützschicht oder Stützmembran in einem separaten Verfahrensschritt eine dichte Schicht als Trennschicht aufgebracht ist. Dies hat zur Folge, dass die Materialien, die die Stützschicht und die Trennschicht aufbauen, bei Composit-Membranen auch unterschiedliche Eigenschaften aufweisen.

Das erfindungsgemäße Verfahren beruht auf einem thermisch induzierten Phasenseparationsprozess mit flüssig-flüssig-Phasentrennung. Erfindungsgemäß bilden die Polymerkomponente und die Verbindungen A und B ein binäres System, das im flüssigen Aggregatzustand einen Bereich aufweist, in dem das System als homogene Lösung vorliegt, und einen Bereich, in dem es eine Mischungslücke besitzt. Wird ein solches System aus dem Bereich, in dem es als homogene Lösung vorliegt, unter die kritische Entmischungs- oder Phasentrenntemperatur abgekühlt, so tritt zunächst eine flüssig-flüssig Entmischung bzw. Phasentrennung in zwei flüssige Phasen auf, nämlich in eine polymerreiche und eine polymerarme Phase. Bei weiterer Abkühlung bis unter die Erstarrungstemperatur erstarrt die polymerreiche Phase zur dreidimensionalen Membranstruktur. Die Abkühlgeschwindigkeit hat dabei einen wesentlichen Einfluß auf die entstehende Porenstruktur. Ist die Abkühlgeschwindigkeit genügend groß, dass die flüssig-flüssig-Phasentrennung nicht unter thermodynamischen Gleichgewichtsbedingungen erfolgen kann sondern unter thermodynamischen Nichtgleichgewichtsbedingungen, jedoch andererseits dennoch relativ langsam, erfolgt die flüssig-flüssig-Phasentrennung etwa gleichzeitig mit der Ausbildung einer Vielzahl von Flüssigkeitströpfchen von im wesentlichen gleicher Größe. Das resultierende Polymergebilde weist dann eine schwammartige zellförmige und offenporige Mikrostruktur auf. Ist die Abkühlgeschwindigkeit deutlich höher, so wird das Polymer fest, bevor sich die meisten Flüssigkeitströpfchen ausbilden können. Hierbei entstehen dann netzwerkartige Mikrostrukturen. Die verschiedenartige Ausbildung solcher schwammartiger mikroporöser Strukturen über Prozesse mit thermisch induzierter flüssig-flüssig-Phasentrennung werden eingehend in der DE-A 27 37 745 beschrieben, auf deren Offenbarung sich ausdrücklich bezogen wird, und z.B. in R.E. Kesting: "Synthetic Polymeric Membranes", John Wiley & Sons, 1985, S. 261-264, dargestellt.

Die eingesetzten Zusammensetzungen aus der Polymerkomponente, der Verbindung A und der Verbindung B, wobei die Verbindungen A und B zusammen das Lösemittelsystem ausbilden, müssen gemeinsam in eine einzige homogene flüssige Phase überführbar sein und eine kritische Entmischungstemperatur aufweisen, unterhalb derer eine Phasentrennung in zwei flüssige Phasen auftritt. Diese liegt jedoch höher als die Entmischungstemperatur einer Lösung, die gleiche Anteile Polymer, jedoch als Lösemittelsystem nur die Verbindung A enthält. Bei Systemen Polymer/Verbindung A mit Mischungslücke im flüssigen Aggregatzustand wird also durch den Zusatz der Verbindung B die kritische Entmischungstemperatur heraufgesetzt. Durch Zugabe der Verbindung B wird eine gezielte Steuerung der Porengröße und des Porenvolumens der erhaltenen porösen Strukturen ermöglicht.

Als Verbindung A sind solche Verbindungen einzusetzen, die Lösemittel für die Polymerkomponente sind und in der diese Polymerkomponente bei Erwärmen bis höchstens zum Siedepunkt dieser Verbindung zu einer homogenen Lösung vollständig gelöst wird. Erfindungsgemäß ist dabei ein solcher Löser als Verbindung A einzusetzen, für den die Entmischungstemperatur einer Lösung von 25 Gew.-% der Polymerkomponente in diesem Löser um mindestens 10% unter dem Schmelzpunkt der reinen, aus dem mindestens einen Polymer bestehenden Komponente liegt. Im Rahmen der vorliegenden Erfindung wird ein solcher Löser als starker Löser bezeichnet.

Die Entmischungs- oder Phasentrenntemperatur kann dabei auf einfache Weise festgestellt werden, indem zunächst eine homogene Lösung der Polymerkomponente in dem zu untersuchenden Löser hergestellt und diese dann auf eine Temperatur aufheizt wird, die ca. 20°C oberhalb der Lösetemperatur liegt. Diese Lösung wird ca. 0,5 Std unter Rühren auf dieser Temperatur gehalten, um eine hinreichende Homogenität zu gewährleisten. Anschließend wird die Lösung mit einer Abkühlrate von 1°C/min unter Rühren abgekühlt. Als Phasentrenntemperatur wird dabei die Temperatur bestimmt, bei der visuell eine beginnende Trübung feststellbar ist. Bei weiterer Abkühlung tritt bei der Erstarrungstemperatur ein Festwerden der polymerreichen Phase ein.

Als Verbindung B wird erfindungsgemäß eine solche Verbindung ausgewählt, die ein schwacher Nichtlöser für die Polymerkomponente ist. Unter einem Nichtlöser für die Polymerkomponente wird dabei eine Verbindung verstanden, welche die Polymerkomponente in einer Konzentration von 1 Gew.-% in dem Nichtlöser beim Erwärmen bis höchstens zum Siedepunkt dieses Nichtlösers nicht zu einer homogenen Lösung auflöst. Hierbei wird im Rahmen der vorliegenden Erfindung die Stärke eines Nichtlösers beurteilt anhand der Differenz zwischen der Entmischungstemperatur eines aus der Polymerkomponente und einem starken Löser bestehenden Systems, und der Entmischungstemperatur eines entsprechenden Systems, enthaltend als Lösemittelsystem den gleichen Löser sowie 10 Gew.-% des zu untersuchenden Nichtlösers. Die Konzentration an Polymer liegt in beiden Fällen bei 25 Gew.-%. Unter einem schwachen Nichtlöser wird dann ein solcher verstanden, der zu einer Erhöhung der Entmischungstemperatur von höchstens 8% gegenüber der Entmischungstemperatur des entsprechenden, nur aus Löser und Polymer bestehenden Systems führt. Ein starker Nichtlöser ist definitionsgemäß ein solcher, der zu einer Erhöhung der Entmischungstemperatur von mindestens 10% führt.

Die Verbindung A kann zusätzlich mit einer oder mehreren Flüssigkeiten, insbesondere mit weiteren Lösern verschnitten sein. Auch die Verbindung B kann in Mischung mit einer oder mehreren weiteren Verbindungen, insbesondere weiteren Nichtlösem eingesetzt werden. Infolgedessen wird im Rahmen der vorliegenden Erfindung unter der Verbindung A nicht nur eine einzelne Verbindung verstanden, sondern auch eine Mischung verschiedener Löser, also z.B. zweier starker Löser oder eines starken mit einem schwächeren Löser, solange die Gesamtwirkung als starker Löser erhalten bleibt. Ebenso wird unter der Verbindung B auch eine Mischung verschiedener Nichtlöser verstanden, also z.B. mehrerer schwacher Nichtlöser, solange die Wirkung als schwacher Nichtlöser erhalten bleibt.

Der zur Membranherstellung erforderliche Anteil an Polymer sowie das Verhältnis von Verbindung A zu Verbindung B im Lösemittelsystem läßt sich durch Erstellung von Phasendiagrammen mittels einfacher Versuche ermitteln. Derartige Phasendiagramme können nach bekannten Methoden entwickelt werden, wie sie z.B. von C.A. Smolders, J.J. van Aartsen, A. Steenbergen, Kolloid-Z. und Z. Polymere, 243 (1971), S. 14-20, beschrieben werden. In der Regel ist bei einem vorgegebenen Löser A der Anteil an Verbindung B, d.h. an schwachem Nichtlöser, in der Mischung aus der Polymerkomponente, der Verbindung A und der Verbindung B abhängig von der Stärke des Nichtlöser, d.h. der Verbindung B. Bevorzugt ist der Anteil der Verbindung B im Lösemittelsystem 1 bis 45 Gew.-%.

Erfindungsgemäß wird als Polymerkomponente mindestens ein Polymer, ausgewählt aus der Gruppe der Polyolefine, eingesetzt. Hierbei kann es sich bei der Polymerkomponente um ein einzelnes Polyolefin oder um eine Mischung aus mehreren Polyolefinen handeln, wobei zu den Polyolefinen im vorliegenden Zusammenhang auch Polyolefincopolymere oder modifizierte Polyolefine zu rechnen sind. Mischungen aus verschiedenen Polyolefinen sind hierbei insofern interessant, als dadurch verschiedene Eigenschaften wie z.B. Permeabilitäten oder mechanische Eigenschaften optimiert werden können. So läßt sich z.B. durch Zugabe bereits geringer Mengen eines Polyolefins mit ultrahohem Molekulargewicht, also beispielsweise mit einem Molekulargewicht von mehr als $10^6$ Dalton, ein starker Einfluß auf die mechanischen Eigenschaften nehmen. Voraussetzung ist dabei natürlich, dass die eingesetzten Polyolefine zusammen in dem verwendeten Lösemittelsystem löslich sind.

In einer vorteilhaften Ausgestaltung des erfinderischen Verfahrens ist das in der Polymerkomponente enthaltene mindestens eine Polymer ein ausschließlich aus Kohlenstoff und Wasserstoff bestehendes Polyolefin. Besonders bevorzugte Polyolefine sind Polypropylen und Poly(4-methyl-1-penten) oder Mischungen dieser Polyolefine untereinander oder mit anderen Polyolefinen. Von besonderem Vorteil ist die Verwendung von Poly(4-methyl-1-penten) oder von einer Mischung von Poly(4-methyl-1-penten) mit Polypropylen. Hiermit lassen sich hohe Gastransferraten bei guten mechanischen Eigenschaften der Membranen realisieren.

Als Verbindungen A und B, die gemeinsam das Lösemittelsystem ausbilden, sind solche Verbindungen einzusetzen, die die genannten Bedingungen erfüllen. Im Falle der bevorzugten Verwendung von Polypropylen als Polymer werden vorzugsweise als Verbindung A Dioctyladipat, Isopropylmyristat oder Mischungen hieraus eingesetzt. Als Verbindung B lassen sich hierbei vorteilhaft Diethylphthalat, Glycerintriacetat, Rizinusöl, Gycerindiacetat oder Mischungen hieraus verwenden. Beim bevorzugten Einsatz von Poly-(4-methyl-1-penten) als Polymer kommen als Verbindung A vorzugsweise Dioctyladipat, Isopropylmyristat, Diphenylether, Dibenzylether oder Mischungen hieraus in Frage. Als Verbindung B haben sich dann Glycerintriacetat, Diethylphthalat, Rizinusöl, N,N-Bis(2-hydroxyethyl)talgfettamin, Sojaöl oder Mischungen hieraus als vorteilhaft erwiesen. Besonders gute Ergebnisse zeigen sich hier bei der Verwendung von Glycerintriacetat als Verbindung B.

Bevorzugt liegt der Polymeranteil des Gemischs, aus dem die Lösung ausgebildet wird, bei 30-60 Gew.-% und der Anteil des Lösemittelsystems, bestehend aus den Verbindungen A und B, bei 70-40 Gew.-%. Besonders bevorzugt liegt der Polymeranteil bei 35-50 % und der Anteil der Verbindungen A und B bei 65-50 Gew.-%. Gegebenenfalls können der Polymerkomponente, den Verbindungen A und B oder auch der Polymerlösung weitere Stoffe wie z.B. Antioxidantien, Keimbildungsmittel, Füllstoffe, Komponenten zur Verbesserung der Biokompatibilität, d.h. der Blutverträglichkeit bei Einsatz der Membran bei der Oxygenation, z.B. Vitamin E, und ähnliche als Additive zugegeben werden.

Die aus Polymerkomponente und dem Lösemittelsystem ausgebildete Polymerlösung wird mittels geeigneter Formwerkzeuge zum Formkörper ausgeformt, um schließlich eine Membran vorzugsweise in Form einer Flachmembran oder Hohlfasermembran zu erhalten. Dabei können übliche Formwerkzeuge wie Breitschlitzdüsen, Gießkästen, Rakel, profilierte Düsen, Ringschlitzdüsen oder Hohlfadendüsen eingesetzt werden.

Vorzugsweise werden mittels des erfindungsgemäßen Verfahrens Hohlfasermembranen hergestellt. Im diesem Fall wird die Polymerlösung durch den Ringspalt der entsprechende Hohlfadendüsen zum Formkörper, d.h. zum Hohlfaden extrudiert. Durch die zentrale Bohrung der Hohlfadendüse wird ein Fluid dosiert, das als Innenfüllung fungiert, die das Lumen der Hohlfasermembran ausbildet und stabilisiert. Der extrudierte Hohlfaden bzw. die resultierende Hohlfasermembran weist dann eine dem Lumen zugewandte Oberfläche, die Innenoberfläche, und eine dem Lumen abgewandte, durch die Wand des Hohlfadens bzw. der Hohlfasermembran von der Innenoberfläche getrennte Oberfläche, die Außenoberfläche auf.

Nach seiner Ausformung wird der Formkörper so mittels eines flüssigen Abkühlmediums abgekühlt, dass eine thermodynamische Nichtgleichgewichts-flüssigflüssig-Phasentrennung im Formkörper, d.h. in der ausgeformten Polymerlösung erfolgt und im weiteren die Polymerstruktur erstarrt und verfestigt. Dabei ist das Abkühlmedium auf eine Temperatur unterhalb der Erstarrungstemperatur temperiert. Erfindungsgemäß ist zur Erzeugung der gewünschten integral asymmetrischen Membran mit Trennschicht als Abkühlmedium eine Flüssigkeit einzusetzen, die ein Nichtlöser für die Polymerkomponente ist, der die Polymerkomponente beim Erwärmen bis höchstens zu seinem Siedepunkt nicht zu einer homogenen Lösung löst, und die mit der Polymerkomponente chemisch nicht reagiert. Die Verwendung eines derartigen Abkühlmediums ist maßgeblich verantwortlich für die Ausbildung einer Trennschicht mit dichterer Struktur. Eine derartige Anforderung an das Abkühlmedium schließt z.B. den Einsatz der als Lösemittelsystem verwendeten Mischung der Verbindungen A und B als Abkühlmedium aus. Ein solches System würde zwar die Polymerkomponente bei der Abkühltemperatur nicht lösen. Bei der Werkzeugtemperatur jedoch bildet die Polymerkomponente, wie oben ausgeführt, eine homogene Lösung aus.

Es ist von Vorteil, wenn Austrittsfläche des Formwerkzeugs und Oberfläche des Abkühlmediums durch einen Spalt räumlich beabstandet sind, der von dem Formkörper vor dem Kontakt mit dem Abkühlmedium durchlaufen wird. Es kann sich dabei um einen Luftspalt handeln, der Spalt kann aber auch mit einer anderen gasförmigen Atmosphäre gefüllt sein und er kann auch beheizt oder gekühlt sein. Die Polymerlösung kann aber auch nach Austritt aus dem Formwerkzeug direkt mit dem Abkühlmedium in Kontakt gebracht werden.

Die als Abkühlmedium eingesetzte Flüssigkeit kann auch eine Komponente enthalten, die ein Löser für die Polymerkomponente ist, oder sie kann auch eine Mischung aus verschiedenen Nichtlösern sein, solange sie insgesamt die Polymerkomponente bei Erwärmen bis zu ihrem Siedepunkt nicht zu einer homogenen Lösung löst. Hierbei ist zu beobachten, dass die Stärke des Nichtlösecharakters des Abkühlmediums die Dichtheit der sich ausbildenden Trennschicht beeinflusst. In einer besonders bevorzugten Ausführung des erfindungsgemäßen Verfahrens wird daher als Abkühlmedium eine Flüssigkeit verwendet, welche ein starker Nichtlöser für die Polymerkomponente ist. Hinsichtlich der Definitionen von Nichtlöser und starkem Nichtlöser sei auf die Ausführungen verwiesen, die im Zusammenhang mit der Verbindung B gemacht wurden. Vorzugsweise ist das Abkühlmedium bei der Abkühltemperatur eine homogene, einphasige Flüssigkeit. Hierdurch ist die Herstellung von Membranen mit besonders homogenen Oberflächenstrukturen gewährleistet. Als Abkühlmedium kann ein solches eingesetzt werden, welches mit dem Lösemittelsystem zu einer homogenen Lösung mischbar ist oder ein solches, welches die das Lösemittelsystem ausbildenden Verbindungen nicht löst.

Zur Einleitung einer thermodynamischen Nichtgleichgewichts-flüssig-flüssig-Phasentrennung muß die Temperatur des Abkühlmediums deutlich unterhalb der kritischen Entmischungstemperatur oder Phasentrenntemperatur der verwendeten Polymerlösung und im weiteren zur Erstarrung der polymerreichen Phase unterhalb der Erstarrungstemperatur liegen. Hierbei wird die Ausbildung der Trennschicht unterstützt, wenn ein möglichst großer Abstand zwischen der Entmischungstemperatur und der Temperatur des Abkühlmediums besteht. Vorzugsweise weist das Abkühlmedium eine Temperatur auf, die um mindestens 100°C unterhalb der Phasentrenntemperatur liegt, und besonders bevorzugt eine Temperatur, die um mindestens 150 °C unterhalb der Phasentrenntemperatur liegt. Es ist von besonderem Vorteil, wenn dabei die Temperatur des Abkühlmediums kleiner als 50°C ist. In Einzelfällen kann eine Kühlung auf Temperaturen unterhalb der Raumtemperatur erforderlich sein. Es ist auch möglich, die Abkühlung abgestuft in mehreren Schritten durchzuführen.

Vorzugsweise befindet sich das flüssige Abkühlmedium in einem Schacht oder in einem Spinnrohr, den bzw. das der Formkörper zur Abkühlung dann durchläuft. Hierbei werden das Abkühlmedium und der Formkörper in der Regel in die gleiche Richtung durch den Schacht bzw. das Spinnrohr geführt. Formkörper und Abkühlmedium können mit gleicher oder unterschiedlicher linearer Geschwindigkeit durch das Spinnrohr geführt werden, wobei je nach Erfordernis entweder der Formkörper oder das Abkühlmedium die höhere lineare Geschwindigkeit aufweisen kann. Derartige Verfahrensvarianten werden beispielsweise in der DE-A-28 33 493 oder in der EP-A-133 882 beschrieben.

Die bei der Extrusion von Hohlfäden eingesetzte Innenfüllung kann gasförmig sein oder sie kann eine Flüssigkeit sein. Im Falle der Verwendung einer Flüssigkeit als Innenfüllung muß eine Flüssigkeit ausgewählt werden, welche die Polymerkomponente in der ausgeformten Polymerlösung unterhalb der kritischen Entmischungstemperatur der Polymerlösung im wesentlichen nicht löst. Zur Erzielung einer offenporigen Struktur an der inneren Oberfläche werden bevorzugt Innenfüllungen eingesetzt, die Löser für das verwendete mindestens eine Polymer sind, wobei die zuvor genannte Bedingung einzuhalten ist, und/oder Temperaturen der Innenfüllung eingestellt, die im Bereich der Polymerlösungstemperatur liegen. Im übrigen können auch die gleichen Flüssigkeiten zum Einsatz kommen, wie sie auch als Abkühlmedium verwendet werden können. Auf diese Weise lassen sich Hohlfasermembranen herstellen, die sowohl an ihrer Aussenseite als auch an ihrer Innenseite eine Trennschicht aufweisen oder auch Hohlfasermembranen, die nur an ihrer Innenseite eine Trennschicht aufweisen. Bevorzugt handelt es sich bei der Innenfüllung dann um einen Nichtlöser für die Polymerkomponente und besonders bevorzugt um einen starken Nichtlöser für die Polymerkomponente. Die Innenfüllung kann dabei mit dem Lösemittelsystem mischbar sein. Im Falle, dass das Fluid gasförmig ist, kann es sich um Luft, einen dampfförmigen Stoff oder bevorzugt um Stickstoff oder andere Inertgase handeln.

In einer weiteren vorteilhaften Ausgestaltung des erfindungsgemäßen Verfahrens wird der aus dem Formwerkzeug austretende Formkörper, d.h. die aus dem Formwerkzeug austretende, ausgeformte Polymerlösung vor der Abkühlung zumindest mit einer seiner Oberflächen, vorzugsweise mit derjenigen Oberfläche, an der die Trennschicht ausgebildet werden soll, einer die Verdampfung der Verbindung A und/oder der Verbindung B fördernden gasförmigen Atmosphäre ausgesetzt, d.h. einer Atmosphäre, in der die Verdampfung der Verbindung A und/oder der Verbindung B möglich ist. Bevorzugt wird zur Ausbildung der gasförmigen Atmosphäre Luft eingesetzt. Ebenso bevorzugt werden Stickstoff oder andere Inertgase eingesetzt oder auch dampfförmige Medien. Vorteilhafterweise ist die gasförmige Atmosphäre klimatisiert, und die gasförmige Atmosphäre hat in der Regel eine Temperatur, die unterhalb der Werkzeugtemperatur liegt. Um dabei einen genügenden Anteil an den Verbindungen A und/oder Verbindung B verdampfen zu können, wird der Formkörper mit zumindest einer seiner Oberflächen bevorzugt während mindestens 0,5 ms der gasförmigen Atmosphäre ausgesetzt.

Zur Bereitstellung der die Verdampfung der Verbindung A und/oder der Verbindung B fördernden gasförmigen Atmosphäre können, wie bereits ausgeführt, Formwerkzeug und Abkühlmedium räumlich so beabstandet werden, dass sich dazwischen ein Spalt ausbildet, der die gasförmige Atmosphäre enthält und der vom Formkörper durchlaufen wird.

So kann etwa bei der Herstellung von Flachmembranen die z.B. durch eine Breitschlitzdüse extrudierte Polymerlösung als Flachfolie zunächst durch einen Spalt geführt werden, beispielsweise durch einen Luftspalt, bevor sie abgekühlt wird. In diesem Fall wird die Flachfolie allseitig, d.h. mit ihren beiden Oberflächen sowie ihren Seitenkanten von der gasförmigen Atmosphäre umgeben, und es wird bei der resultierenden Flachmembran an ihren beiden Oberflächen die Ausbildung der Trennschicht beeinflusst. Erfolgt die Extrusion der Flachfolie direkt auf einen beheizten Träger z.B. in Form einer Heizwalze und durchläuft die Flachfolie auf dem Träger anschließend noch eine bestimmte Strecke eine gasförmige Atmosphäre, bevor sie im Kühlmedium abgekühlt wird, so kommt nur eine Oberfläche der Flachfolie, nämlich die der Heizwalze abgewandte Oberfläche, mit der gasförmigen Atmosphäre in Verbindung, so dass nur an dieser Oberfläche die Ausbildung der Trennschicht durch eine Verdampfung beeinflusst wird.

Im Falle der Herstellung von Hohlfasermembranen kann der die Düse verlassende Hohlfaden ebenfalls durch einen Spalt geführt werden, der zwischen Düse und Abkühlmedium ausgebildet ist und der die gasförmige Atmosphäre enthält.

Im Einzelfall kann die Struktur der Trennschicht auch durch einen Verzug der ausgeformten Polymerlösung unterhalb der Düse, d.h. insbesondere im Luftspalt beeinflusst werden, wobei der Verzug durch Einstellung einer Differenz zwischen der Austrittsgeschwindigkeit der Polymerlösung aus dem Formwerkzeug und der Geschwindigkeit der ersten Abzugseinrichtung für den abgekühlten Formkörper erzeugt wird.

Nach Abkühlung und Verfestigung der Polymerstruktur werden die Verbindungen A und B in der Regel aus dem Formkörper entfernt. Die Entfernung kann beispielsweise durch Extraktion erfolgen. Vorzugsweise werden dabei solche Extraktionsmittel eingesetzt, die das Polymer bzw. die Polymeren nicht lösen, die jedoch mischbar mit den Verbindungen A und B sind. Anschließend kann eine Trocknung bei erhöhten Temperaturen erforderlich sein, um das Extraktionsmittel aus der Membran zu entfernen. Brauchbare Extraktionsmittel sind Aceton, Methanol, Ethanol und bevorzugt Isopropanol.

In manchen Fällen kann es auch zweckmäßig sein, die beiden Verbindungen A und B entweder beide oder jeweils eine zumindest teilweise im Formkörper zu belassen und nur eine der Verbindungen oder gar keine der Verbindungen zu extrahieren. Auch weitere als Additive den Verbindungen A und/oder B zugegebene Komponenten können in der Membranstruktur verbleiben und so ebenfalls z.B. als funktionelle Wirkflüssigkeiten dienen. Verschiedene Beispiele für funktionelle Wirkflüssigkeiten enthaltende mikroporöse Polymere werden in der DE-A 27 37 745 beschrieben.

Vor oder nach der Entfernung zumindest eines wesentlichen Teils des Lösemittelsystems kann eine geringfügige Verstreckung der Membran erfolgen, um insbesondere die Eigenschaften der Trennschicht in gezielter Weise zu modifizieren. Beispielsweise können in einer im wesentlichen dichten Trennschicht durch die Verstreckung, Poren erzeugt und/oder die Porengröße der Trennschicht auf die im speziellen Anwendungsfall der resultierenden Membran erforderliche Größe eingestellt werden.

Zur Herstellung der erfindungsgemäßen Membran müssen die Poren jedoch kleiner als 100 nm bleiben, damit die Membran für den Gasaustausch oder auch zur Gastrennung geeignet ist, ein früher Flüssigkeitsdurchbruch vermieden werden kann und der Gastrennfaktor $\alpha(CO_2/N_2)$ erfindungsgemäß mindestens 1 beträgt. Daher sollte bei Herstellung der erfindungsgemäßen Membranen die Verstreckung in der Regel 10-15 % nicht überschreiten. Die Verstreckung kann nach Erfordernis auch in mehrere Richtungen erfolgen und wird vorteilhafterweise unter erhöhten Temperaturen vorgenommen. Beispielsweise kann eine solche Verstreckung auch während einer gegebenenfalls erforderlichen Trocknung der Membran nach der Extraktion durchgeführt werden.

Mittels des erfindungsgemäßen Verfahrens lassen sich auf der einen Seite Membranen für Gastrennaufgaben, bei denen beispielsweise eine einzelne Gaskomponente selektiv aus einer Mischung von mindestens zwei Gasen abgetrennt oder eine einzelne Gaskomponente in einer Mischung von mindestens zwei Gasen angereichert wird, oder für Gastransferaufgaben einsetzen, bei denen selektiv ein Gas, das in einer Flüssigkeit gelöst ist, aus dieser Flüssigkeit entfernt wird, und/oder ein Gas aus einer Mischung von Gasen in einer Flüssigkeit gelöst wird. Auf der anderen Seite lassen sich durch Einstellung der Porengröße der Trennschicht z.B. in einem nachgeschalteten Verstreckungsschritt auch Membranen für die Nanofiltration wie z.B. für die Abtrennung niedermolekularer Substanzen bevorzugt aus nicht-wässrigen Medien oder für die Ultrafiltration wie z.B. für die Behandlung von Frischwasser, Abwasser oder Prozesswasser oder auch für Anwendungen im Bereich der Lebensmitteloder der Milchindustrie.

Das erfindungsgemäße Verfahren ist besonders zur Herstellung der erfindungsgemäßen integral asymmetrischen Membran geeignet.

Die erfindungsgemäße Membran zeichnet sich aufgrund ihrer Struktur durch hohe Gasflüsse und hohe Gastransferraten bei gleichzeitig hoher Sicherheit gegenüber einem Durchbruch der Flüssigkeit, von der bei Anwendung der erfindungsgemäßen Membran zum Gastransfer eine gasförmige Komponente abgetrennt oder der eine gasförmige Komponente hinzugefügt werden soll, sowie durch gute mechanische Eigenschaften aus. Hierzu weist die Membran eine hohe Volumenporosität auf, wobei diese im wesentlichen durch die Struktur der Stützschicht bestimmt ist, und eine definierte, gegenüber der Stützschicht dichtere Struktur aufweisende Trennschicht mit geringer Dicke.

Die Stützschicht der erfindungsgemäßen Membran kann die zuvor beschriebenen verschiedenen Strukturen aufweisen. In einer Ausführungsform der erfindungsgemäßen Membranen weist die Stützschicht eine schwammartige zellförmige und offenporige Struktur auf, bei der die Poren als umschlossene Mikrozellen beschrieben werden können, die von Kanälen, kleineren Poren oder Durchlässen miteinander verbunden sind. In einer weiteren Ausführungsform der erfindungsgemäßen Membranen weist die Stützschicht eine nichtzellförmige Struktur auf, bei der die Polymerphase und die Poren sich durchdringende Netzwerkstrukturen ausbilden. In jedem Fall ist aber die Stützschicht frei von Makrovoids, also frei von solchen Poren, die in der Literatur auch häufig als Fingerporen oder Kavernen bezeichnet werden.

Die Poren der Stützschicht können jede beliebige Geometrie aufweisen und z.B. von länglicher, zylindrischer, runder Form oder auch von einer mehr oder weniger unregelmäßigen Gestalt sein. Erfindungsgemäß sind die Poren in der Stützschicht im Mittel im wesentlichen isotrop. Hierunter ist zu verstehen, dass, wenngleich die einzelnen Poren auch eine längliche Form besitzen können, über alle Poren gemittelt die Poren in alle Raumrichtungen im wesentlichen gleiche Ausdehnung aufweisen, wobei Abweichungen zwischen den Ausdehnungen in den einzelnen Raumrichtungen von bis zu 20% eingeschlossen sind.

Bei einer zu geringen Volumenporosität, d.h. einem zu geringen Anteil an Poren bezogen auf das Gesamtvolumen der Membran sind die erreichbaren Gasflüsse und Gastransferraten zu gering. Andererseits führt ein zu hoher Anteil an Poren in der Membran zu mangelhaften mechanischen Eigenschaften, und die Membran läßt sich in nachfolgenden Verarbeitungprozessen nicht mehr problemlos verarbeiten. Daher weist die erfindungsgemäße Membran eine Volumenporosität im Bereich von größer als 30 Vol.-% bis kleiner als 75 Vol.-%, bevorzugt im Bereich von größer als 50 Vol.-% bis kleiner als 75 Vol.-% und besonders bevorzugt von größer als 50 Vol.-% bis kleiner als 65 Vol.-% auf.

Die erfindungsgemäße Membran kann nur an einer ihrer Oberflächen eine Trennschicht aufweisen, sie kann jedoch auch an ihren beiden Oberflächen eine Trennschicht aufweisen. Eine bevorzugte Ausführungsform der erfindungsgemäßen Membran weist nur an ihrer einen, der ersten Oberfläche eine Trennschicht auf, und die zweite Oberfläche auf der gegenüberliegenden Seite der Stützschicht besitzt eine offenporige netzwerkartige Struktur mit näherungsweise kreisförmigen Öffnungen. Unter näherungsweise kreisförmigen Öffnungen werden solche Öffnungen verstanden, deren Verhältnis der größeren zur kleineren Achse nicht mehr als 2/1 beträgt. Derartige Membranen weisen wegen ihrer offenporigen Struktur an ihrer einen Seite z.B. einen vergleichsweise geringeren Widerstand für den Gasfluss auf. Bei den erfindungsgemäßen Membranen vorhandene Poren in der Oberfläche, die die Trennschicht aufweist, deren Durchmesser erfindungsgemäß < 100 nm ist, sind gleichmäßig, d.h. homogen über diese Oberfläche verteilt.

Die Trennschicht hat einerseits Einfuß auf die Gasflüsse und die Gastransferraten, anderseits aber auch auf die Durchbruchzeit, d.h. auf die Zeitspanne, die die Membran gegenüber einem Durchbruch der Flüssigkeit, von der bei Anwendung der erfindungsgemäßen Membran eine gasförmige Komponente abgetrennt oder der eine gasförmige Komponente hinzugefügt werden soll, oder gegenüber einem Durchbruch von in der Flüssigkeit enthaltenen Komponenten sicher ist. Sie hat darüber hinaus auch Einfluss darauf, ob und wie gut verschiedene Gase aus einem Gasgemisch voneinander getrennt werden können, d.h. z.B. auf den Gastrennfaktor $\alpha(CO_2/N_2)$.

So resultieren bei einer nichtporösen Trennschicht sehr lange Durchbruchzeiten, jedoch sind die Transferraten und die Gasflüsse in ihrer Größe begrenzt, da in nichtporösen Membranschichten der Gastransfer bzw. der Gasfluss allein über eine vergleichsweise langsame Lösüngs-Diffusion erfolgt im Unterschied zum wesentlich größeren "Knudsen Fluß" in porösen Strukturen. Im Falle einer porösen Trennschicht hingegen sind die Gastransferraten und die Gasflüsse gegenüber einer nichtporösen Trennschicht erhöht, jedoch resultieren aufgrund der Poren dann kürzere Durchbruchzeiten.

Die Dichtigkeit der Trennschicht und ihre Eignung insbesondere für den Gastransfer kann oftmals nicht mit ausreichender Sicherheit allein aufgrund visueller Untersuchung z.B. mittels eines Rasterelektronenmikroskops beurteilt werden. Hierbei spielt nicht nur die Größe vorhandener Poren oder auch allgemein struktureller Fehlstellen wie z. B. Risse, sondern auch deren Anzahl eine Rolle. Die Abwesenheit bzw. das Vorhandensein von Poren bzw. von Fehlstellen sowie deren Anzahl kann jedoch beurteilt werden durch Untersuchung der Gaspermeation und der Gasflüsse durch die Membran sowie der Gastrennfaktoren.

Es ist allgemein bekannt, dass die allgemeinen Prinzipien des Transports von Gasen in Polymermembranen von der Porengröße in der Membran abhängen. Bei Membranen, bei denen die Trennschicht höchstens Poren bis zu einer Größe von ca. 2-3 nm aufweist, permeiert das Gas durch diese Membran über Lösungs-Diffusions-Mechanismen. Der Permeabilitätskoeffizient $P_0$ eines Gases ist dann allein abhängig vom Polymermaterial der Membran und vom Gas selbst, und der Gasfluss $Q_0$, d.h. der durch die Membrandicke dividierte Permeabilitätskoeffizient, ist für ein bestimmtes Gas nur abhängig von der Dicke der nichtporösen Membran. Der Gastrennfaktor $\alpha$, der das Verhältnis der Permeabilitätskoeffizienten bzw. der Gasflüsse Q zweier Gase in dieser Membran angibt, wird damit ebenfalls abhängig allein vom Polymermaterial und nicht z.B. von der Dicke der Trennschicht. Der Gastrennfaktor z.B. für $CO_2$ und $N_2$ ergibt sich dann zu $\alpha_0(CO_2/N_2) = P_0(CO_2)/P_0(N_2)$. Für allgemein verwendete Polymere resultieren $\alpha_0(CO_2/N_2)$-Werte von mindestens 1, in der Regel von mindestens 3.

In porösen Membranen mit Poren einer Größe zwischen 2 nm und ca. 10 µm erfolgt der Transport von Gasen hauptsächlich über "Knudsen Fluss". Die dann für Gase ermittelten Gastrennfaktoren $\alpha_1$ als Verhältnis der gemessenen scheinbaren Permeabilitätskoeffizienten sind dann umgekehrt proportional zur Wurzel aus dem Verhältnis der Molekulargewichte der Gase. Für $\alpha_1(CO_2/N_2)$ ergibt sich also z.B. $\sqrt{28/44} = 0,798$.

Permeiert ein Gas durch die Membranen der vorliegenden Erfindung, welche eine mikroporöse Stützstruktur und eine gegenüber dieser dichtere Trennschicht mit Poren einer maximalen mittleren Größe von 100 nm, so wird die Permeation durch die Trennschicht der geschwindigkeitsbestimmende Schritt. Wenn in dieser Trennschicht eine nennenswerte Anzahl von Poren oder Fehlstellen auftritt, so nehmen auf der einen Seite die scheinbaren Permeabilitätskoeffizienten zu, auf der anderen Seite nimmt jedoch der Gastrennfaktor ab. Daher kann die Anwesenheit oder die Abwesenheit von Poren und/oder Fehlstellen in der Trennschicht der erfindungsgemäßen Membranen abgelesen werden anhand der gemessenen Gastrennfaktoren für $CO_2$ und $N_2$, $\alpha(CO_2/N_2)$. Wenn der $CO_2/N_2$-Gastrennfaktor $\alpha(CO_2/N_2)$ kleiner als 1 wird, weist die Membran eine zu große Anzahl an Poren oder Fehlstellen in der Trennschicht auf. Bei Vorliegen einer zu hohen Anzahl von Poren oder Fehlstellen in der Trennschicht kann jedoch ein zu früher Flüssigkeitsdurchbruch bzw. Plasmadurchbruch nicht mehr mit genügender Sicherheit ausgeschlossen werden und die Membranen sind für einen Langzeiteinsatz in der Blutoxygenation nicht geeignet. Ebensowenig können derartige Membranen für Anwendungen im Bereich der Gasseparation eingesetzt werden. Die erfindungsgemäßen Membranen weisen daher einen Gastrennfaktor $\alpha(CO_2/N_2)$ von mindestens 1 und bevorzugt von mindestens 2 und besonders bevorzugt von mindestens 5 auf.

Die Dicke der Trennschicht darf nicht zu gering sein, da hierdurch die Gefahr für Fehlstellen und damit für einen Durchbruch erhöht wird und die $\alpha(CO_2/N_2)$-Werte zu gering werden. Allerdings ist auch dann die Zeit bis zum tatsächlichen Durchbruch dennoch relativ lang, da bei den erfindungsgemäßen Membranen keine bevorzugte Richtung für den Fluß einer Flüssigkeit vorliegt, sondern der von der Flüssigkeit zurückzulegende Weg aufgrund der Porenstruktur sehr gewunden ist. Im Unterschied hierzu sind die Membranen zu sehen, die nach dem erwähnten Schmelz-Streckverfahren hergestellt sind und bei denen aufgrund der ausgeprägten Anisotropie der Poren eine bevorzugte Richtung für den Fluß von Flüssigkeiten von der einen Oberfläche zur anderen resultiert.

Während bei zu geringen Dicken der Trennschicht die Gefahr für Fehlstellen zu groß wird, werden andererseits bei einer zu großen Trennschichtdicke die Transferraten und die Gasflüsse zu gering. Bevorzugt liegt daher die Dicke der Trennschicht zwischen 0,01 µm und 5 µm und besonders bevorzugt zwischen 0,1 µm und 2 µm. Hervorragend geeignet sind erfindungsgemäße Membranen mit einer Trennschichtdicke zwischen 0,1 µm und 0,6 µm. Die Dicke der Trennschicht kann für die erfindungsgemäßen Membranen auf einfache Weise durch Ausmessen der Schicht anhand von mittels Rasterelektronenmikroskopie erstellten Bruchbildem oder mittels Transmissionselektronenmikroskopie erstellten Ultradünnschnittcharakterisierungen ermittelt werden. Damit lassen sich in Verbindung mit der hohen Porosität der Membranen eine für den Einsatz zur Blutoxygenation genügend hohe Permeabilität der Membranen und damit genügend hohe Gasflüsse erzielen. Bevorzugt weisen daher die erfindungsgemäßen Membranen einen Gasfluss Q für $CO_2$ $Q(CO_2)$, von mindestens 5 ml/(cm$^{2*}$min$^*$bar) auf.

Eine wichtige Anwendung der erfindungsgemäßen Membranen ist die Oxygenation von Blut. Bei diesen Anwendungen spielt, wie bereits ausgeführt wurde, die Plasmadurchbruchzeit eine Rolle, d.h. die Zeit, die die Membran gegenüber einem Durchbruch von Blutplasma stabil ist. Hierbei ist hervorzuheben, dass ein Plasmadurchbruch ein wesentlich komplexerer Vorgang ist als das bloße Durchdringen einer hydrophilen Flüssigkeit durch eine hydrophobe Membran. Nach gängiger Lehrmeinung wird ein Plasmadurchbruch dadurch hervorgerufen, dass zunächst durch im Blut enthaltene Proteine und Phospholipide eine Hydrophilierung des Porensystems der Membran erfolgt und in einem nachgelagerten Schritt schlagartig ein Eindringen von Blutplasma in das hydrophilierte Porensystem stattfindet. Als kritische Größe für einen Flüssigkeitsdurchbruch wird daher die Plasmadurchbruchzeit angesehen. Die erfindungsgemäßen Membranen weisen bevorzugt eine Plasmadurchbruchzeit von mindestens 20 Stunden, besonders bevorzugt eine Plasmadurchbruchzeit von mindestens 48 Stunden auf.

Generell erfolgt bei den erfindungsgemäß hergestellten bzw. bei den erfindungsgemäßen Membranen der Übergang von der porösen Stützschicht zur Trennschicht in einem engen Bereich der Membranwand. Bei einer bevorzugten Ausführungsform der erfindungsgemäßen Membran ändert sich die Membranstruktur beim Übergang von der Trennschicht zur Stützschicht abrupt, d.h. die Membranstruktur wechselt im wesentlichen übergangslos und sprunghaft von der mikroporösen Stützstruktur zur Trennschicht. Membranen mit einer derartigen Struktur weisen gegenüber solchen Membranen mit einem graduellen Übergang von der Trennschicht zur Stützschicht den Vorteil einer höheren Durchlässigkeit der Stützschicht für zu transferierende Gase aus, da die Stützschicht in ihrem an die Trennschicht angrenzenden Bereich weniger kompakt ist.

Die erfindungsgemäße hydrophobe Membran ist im wesentlichen aus mindestens einem Polymer, ausgewählt aus der Gruppe der Polyolefine, zusammengesetzt. Das mindestens eine Polymer kann ein einzelnes Polyolefin oder eine Mischung aus mehreren Polyolefinen sein, wobei hierunter auch Polyolefincopolymere oder modifizierte Polyolefine fallen. Mischungen aus Polyolefinen mit unterschiedlichem Molekulargewicht oder aus verschiedenen Polyolefinen sind hierbei insofern interessant, als dadurch verschiedene Eigenschaften wie z.B. Gastransferraten oder mechanische Eigenschaften optimiert werden können. So läßt sich z.B. durch Zugabe bereits geringer Mengen eines Polyolefins mit ultrahohem Molekulargewicht, also beispielsweise mit einem Molekulargewicht von mehr als $10^6$ Dalton, ein starker Einfluß auf die mechanischen Eigenschaften nehmen.

Bevorzugt ist die Membran aus einem Polyolefin zusammengesetzt, das ausschließlich aus Kohlenstoff und Wasserstoff besteht. Besonders bevorzugt besteht die Membran aus Polypropylen oder Poly(4-methyl-1-penten) oder Mischungen dieser Polyolefine mit anderen Polyolefinen. Mit besonderem Vorteil wird Poly(4-methyl-1-penten) oder eine Mischung von Poly(4-methyl-1-penten) mit Polypropylen verwendet. Hiermit lassen sich hohe Gastransferraten bei guten mechanischen Eigenschaften der Membranen realisieren. Gegebenenfalls kann das mindestens eine Polymer auch weitere Stoffe wie z.B. Antioxidantien, Keimbildungsmittel, Füllstoffe, Komponenten zur Verbesserung der Biokompatilität, d.h. der Blutverträglichkeit bei Einsatz der Membran bei der Oxygenation, z.B. Vitamin E, und ähnliche als Additive enthalten.

In einer bevorzugten Ausführungsform ist die Membran eine Flachmembran. Vorzugsweise besitzt die Flachmembran eine Dicke zwischen 10 und 300 μm, besonders bevorzugt zwischen 30 und 150 μm. Die Flachmembran kann eine Trennschicht nur an einer ihrer Oberflächen oder auch an ihren beiden Oberflächen aufweisen.

In einer ebenfalls bevorzugten Ausführungsform ist die erfindungsgemäße Membran eine Hohlfasermembran. Je nach Ausführung kann diese eine Trennschicht nur an ihrer Innenoberfläche, d.h. an ihrer dem Lumen zugewandten Oberfläche, oder nur an ihrer Aussenoberfläche, d.h. der dem Lumen abgewandten Oberfläche aufweisen oder aber sowohl an ihrer Innenoberfläche als auch an ihrer Außenoberfläche eine Trennschicht besitzen. Vorzugsweise befindet sich die Trennschicht an der Außenoberfläche. Die Hohlfasermembran weist bevorzugt einen Außendurchmesser zwischen 30 und 3000 μm, besonders bevorzugt einen Außendurchmesser zwischen 50 und 500 μm auf. Günstig ist eine Wanddicke der Hohlfasermembran zwischen 5 und 150 μm, besonders günstig eine Dicke zwischen 10 und 100 μm.

Die erfindungsgemäße Membran besitzt hervorragende mechanische Eigenschaften, wodurch eine problemlose Weiterverarbeitung in nachfolgenden Verarbeitungsschritten möglich ist. So hat es sich bei Verwendung von Hohlfasermembranen als günstig in Bezug auf die Leistungscharakteristik daraus hergestellter Membranmodule erwiesen, wenn die Hohlfasermembranen zunächst beispielsweise mittels geeigneter Wirkverfahren zu Matten aus zueinander im wesentlichen parallelen Hohlfasermembranen verarbeitet werden, aus denen dann entsprechende Bündel hergestellt werden. Damit sind textile Verarbeitungsverfahren verbunden, die hohe Anforderungen an die mechanischen Eigenschaften der Membranen stellen, insbesondere an die Festigkeit und die Dehnung. Diese Anforderungen werden von der erfindungsgemäßen Membran erfüllt. Die erfindungsgemäßen Hohlfasermembranen weisen bevorzugt eine Bruchkraft von mindestens 70 cN und eine Bruchdehnung von mindestens 75% auf.

Die erfindungsgemäße Membran lässt sich in zahlreichen Anwendungsgebieten einsetzen, bei denen eine Membran mit einer Trennschicht erforderlich ist, die höchstens Poren mit einer Größe bis zu 100 nm aufweist. Bevorzugt ist die erfindungsgemäße Membran geeignet für Anwendungen im Bereich der Gastrennung oder für Anwendungen im Bereich des Gasaustausches, bei denen gasförmige Komponenten aus Flüssigkeiten abgetrennt werden sollen oder zu diesen hinzugefügt werden sollen. Aufgrund ihrer hohen Plasmadichtigkeit, d.h. ihrer langen Plasmadurchbruchzeiten sowie ihrer hohen Gastransferleistungen für $O_2$ und $CO_2$ sind die erfindungsgemäßen Membranen hervorragend geeignet für den Einsatz in Oxygenatoren, d.h. für die Oxygenation von Blut und insbesondere für die Langzeitoxygenation von Blut.

Die Erfindung soll anhand der nachfolgenden Beispiele und Figuren näher erläutert werden. Es zeigen:

Fig. 1: Rasterelektronenmikroskopische (REM-) Aufnahme der äußeren Oberfläche einer Hohlfasermembran gemäß Beispiel 1 bei 60000-facher Vergrößerung

Fig. 2: REM-Aufnahme der inneren Oberfläche einer Hohlfasermembran gemäß Beispiel 1 bei 13500-facher Vergrößerung

Fig. 3: REM-Aufnahme der Bruchfläche senkrecht zur Längsachse einer Hohlfasermembran gemäß Beispiel 1 im Bereich ihrer Außenseite bei 13500-facher Vergrößerung

Fig. 4: REM-Aufnahme der äußeren Oberfläche einer Hohlfasermembran gemäß Beispiel 2 bei 60000-facher Vergrößerung

Fig. 5: REM-Aufnahme der inneren Oberfläche einer Hohlfasermembran gemäß Beispiel 2 bei 13500-facher Vergrößerung

Fig. 6: REM-Aufnahme der Bruchfläche senkrecht zur Längsachse einer Hohlfasermembran gemäß Beispiel 2 im Bereich ihrer Außenseite bei 13500-facher Vergrößerung

Fig. 7: REM-Aufnahme der äußeren Oberfläche einer Hohlfasermembran gemäß Beispiel 5 bei 60000-facher Vergrößerung

Fig. 8: REM-Aufnahme der inneren Oberfläche einer Hohlfasermembran gemäß Beispiel 5 bei 13500-facher Vergrößerung

Fig. 9: REM-Aufnahme der Bruchfläche senkrecht zur Längsachse einer Hohlfasermembran gemäß Beispiel 5 im Bereich ihrer Außenseite bei 13500facher Vergrößerung

Fig. 10: REM-Aufnahme der äußeren Oberfläche einer Hohlfasermembran gemäß Beispiel 7 bei 60000-facher Vergrößerung

Fig. 11: REM-Aufnahme der inneren Oberfläche einer Hohlfasermembran gemäß Beispiel 7 bei 13500-facher Vergrößerung

Fig. 12: REM-Aufnahme der Bruchfläche senkrecht zur Längsachse einer Hohlfasermembran gemäß Beispiel 7 im Bereich ihrer Außenseite bei 13500facher Vergrößerung

Fig. 13: REM-Aufnahme der inneren Oberfläche einer Hohlfasermembran gemäß Vergleichsbeispiel 1 bei 6000-facher Vergrößerung

Fig. 14: REM-Aufnahme der äußeren Oberfläche einer Hohlfasermembran gemäß Vergleichsbeispiel 1 bei 27000-facher Vergrößerung

Fig. 15: REM-Aufnahme der äußeren Oberfläche einer Hohlfasermembran gemäß Vergleichsbeispiel 2 bei 27000-facher Vergrößerung

Fig. 16: REM-Aufnahme der Bruchfläche senkrecht zur Längsachse einer Hohlfasermembran gemäß Vergleichsbeispiel 2 im Bereich ihrer Außenseite bei 13500-facher Vergrößerung

Fig. 17: REM-Aufnahme einer Membran gemäß Vergleichsbeispiel 4 bei 3000-facher Vergrößerung; Bruchkante der Membran zwischen Membranwand und derjenigen Oberfläche, die während der Membranherstellung der Glasseite zugewandt war

Fig. 18: REM-Aufnahme einer Membran gemäß Vergleichsbeispiel 4, welche bei 9000-facher Vergrößerung die Membranoberfläche zeigt, die während der Membranherstellung der Glasseite zugewandt war

Fig. 19: REM-Aufnahme einer Membran gemäß Vergleichsbeispiel 5 bei 3000-facher Vergrößerung; Bruchkante der Membran zwischen Membranwand und derjenigen Oberfläche, die während der Membranherstellung der Glasseite zugewandt war

Fig. 20: REM-Aufnahme einer Membran gemäß Vergleichsbeispiel 4, welche bei 900-facher Vergrößerung die Membranoberfläche zeigt, die während der Membranherstellung der Glasseite zugewandt war

In den Beispielen wurden die folgenden Methoden zur Charakterisierung der erhaltenen Membranen angewandt:

Bestimmung der Plasmadurchbruchzeit:

Zur Bestimmung der Plasmadurchbruchzeit wird eine auf 37°C temperierte Phospholipidlösung (1,5 g L-$\alpha$-Phosphatidy-LCholine in 500 ml physiologischer Kochsalzlösung gelöst) bei einem Druck von 1.0 bar mit einem Fluß von 6 l/(min*2m$^2$) an der einen Oberfläche einer Membranprobe entlanggeführt. An der anderen Oberfläche der Membranprobe wird Luft entlangströmen lassen, die nach Verlassen der Membranprobe durch eine Kühlfalle geleitet wird. Es wird das Gewicht der in der Kühlfalle gesammelten Flüssigkeit als Funktion der Zeit gemessen. Die Zeit, die bis zum signifikanten Ansteigen des Gewichts, d.h. bis zur ersten signifikanten Flüssigkeitsansammlung in der Kühlfalle vergeht, wird als Plasmadurchbruchzeit bezeichnet.

Bestimmung der Volumenporosität:

Eine Probe von mindestens 0,5 g der zu untersuchenden Membran wird trocken eingewogen. Die Membranprobe wird anschließend in eine das Membranmaterial benetzende, jedoch nicht quellende Flüssigkeit für 24 Stunden eingelegt, so dass die Flüssigkeit in alle Poren eindringt. Dies lässt sich visuell daran erkennen, dass die Membranprobe von einem opaken in einen glasigen, transparenten Zustand übergeht. Anschließend wird die Membranprobe aus der Flüssigkeit entnommen, an der Membranprobe anhaftende Flüssigkeit durch Zentrifugieren bei ca. 1800 g entfernt und die Masse der so vorbehandelten nassen, d.h. flüssigkeitsgefüllten Membranprobe bestimmt.

Die Volumenporosität in % wird nach folgender Formel bestimmt:

$$\text{Volumenporosität [\%]} = 100 * \frac{(m_{nass} - m_{trocken})/\rho_{Flüss.}}{(m_{nass} - m_{trocken})/\rho_{Flüss.} + m_{trocken}/\rho_{Polymer}}$$

wobei bedeuten:

$m_{trocken}$ = Gewicht der trockenen Membranprobe
$m_{nass}$ = Gewicht der nassen, flüssigkeitsgefüllten Membranprobe
$\rho_{Flüss.}$ = Dichte der verwendeten Flüssigkeit
$\rho_{Polymer}$ = Dichte des Membranpolymers

Bestimmung der Gasflüsse:

Zur Bestimmung der Gasflüsse wird eine Membranprobe auf einer ihrer Seiten mit dem zu messenden Gas mit einem konstanten Prüfdruck von 2 bar beaufschlagt. Bei Hohlfasermembranen wird hierzu das Gas in das Lumen der Hohlfasermembran eingeleitet. Es wird der durch die Wand der Membranprobe hindurchtretende Volumenstrom des Gases ermittelt und bezüglich des Prüfdrucks sowie der vom Gas durchströmten Fläche der Membranprobe normiert. Bei Hohlfasermembranen wird hierbei die das Lumen umschließende Innenfläche der Membran eingesetzt.

Bestimmung der Bruchkraft und der Bruchdehnung:

Zur Charakterisierung der Membran hinsichtlich ihrer Bruchkraft und ihrer Bruchdehnung wird die Membran bei Raumtemperatur mit konstanter Geschwindigkeit bis zum Bruch gedehnt und die hierfür benötigte Kraft zusammen mit der Längenänderung bestimmt.

Bestimmung der mittleren Durchmessers der Poren in der Trennschicht:

Die Bestimmung des mittleren Durchmessers der Poren in der Trennschicht erfolgt mit Hilfe eines bildanalytischen Verfahrens. Hierbei wird für die Poren eine kreisrunde Fläche angenommen. Der mittlere Porendurchmesser ergibt sich als arithmetischer Mittelwert aller auf einer Membranfläche von ca. 8 µm x 6 µm bei 60000-facher Vergrößerung sichtbaren Poren.

Beispiel 1:

36,6 Gew.-% Poly-(4-methyl-1-penten) (TPX DX845) wurden unter Stickstoffbeaufschlagung in einem Behälter mit Rührer bei einer Temperatur von 260°C in 63,4 Gew.-% eines Lösemittelsystems, bestehend aus 70 Gew.-% Dioctyladipat, das für Poly-(4-methyl-1-penten) als starker Löser wirkt, 20 Gew.-% Glycerintriacetat und 10 Gew.-% Rizinusöl, wobei letztere für Poly-(4-methyl-1-penten) als schwache Nichtlöser wirken, gelöst. Die klare und homogene Lösung wurde nach Entgasung mittels einer Zahnradpumpe einer auf 248°C und damit auf eine Temperatur oberhalb der Entmischungstemperatur beheizten Hohlfadendüse mit einem Außendurchmesser des Ringspalts von 1,2 mm zugeführt und zu einem Hohlfaden extrudiert. In das Lumen des Hohlfadens wurde durch die Innenbohrung der Hohlfadendüse Stickstoff dosiert. Nach einer Luftstrecke von 5 mm durchlief der Hohlfaden ein ca. 1 m langes Spinnrohr, welches von auf Raumtemperatur temperiertem Glycerintriacetat als Abkühlmedium durchströmt wurde. Der infolge der Abkühlung im Spinnrohr verfestigte Hohlfaden wurde mit einer Abzugsgeschwindigkeit von 72 m/min aus dem Spinnrohr abgezogen, auf eine Spule aufgewickelt, anschließend zunächst mit Isopropanol extrahiert und danach bei ca. 120°C getrocknet.

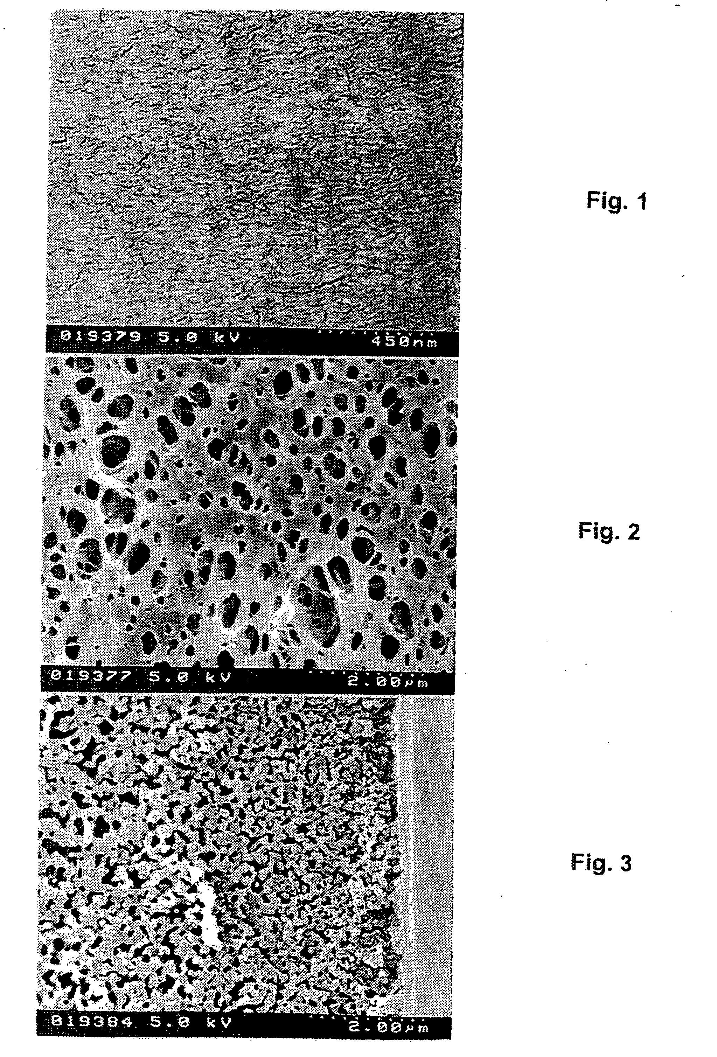

Es wurde eine Hohlfasermembran erhalten mit einem Aussendurchmesser von 365 µm und einer Wandstärke von 86 µm, für die bei rasterelektronischer (REM-) Untersuchung auch bei einer Vergrößerung von 60 000 an ihrer äußeren Oberfläche keine Poren feststellbar waren (Fig. 1), wohingegen die innere, dem Lumen zugewandte Oberfläche eine offenporige netzwerkartige Struktur mit näherungsweise kreisförmigen Öffnungen aufweist (Fig. 2). Im Bruchbild einer Bruchfläche senkrecht zur Längsachse der Hohlfasermembran ist die schwammartige, offenporige mikroporöse Stützstruktur erkennbar (Fig. 3), die von der ca. 0,2 µm dicken Trennschicht abgedeckt wird. Für die Membran gemäß diesem Beispiel wurde eine Volumenporosität von 57 %, ein $CO_2$-Fluss von 8,16 ml/(cm$^{2*}$min$^*$bar), ein $N_2$-Fluss von 1,24 ml/(cm$^{2*}$min$^*$bar) sowie ein Gastrennfaktor $\alpha(CO_2/N_2)$ von 6,6 ermittelt. Die Membran wies eine Plasmadurchbruchzeit von mehr als 72 Stunden auf. Nach Erreichen dieser Zeit wurde die Prüfung abgebrochen. Mit einer Bruchkraft von 85 cN und einer Bruchdehnung von 129 % ließ sich die Membran gut in textilen Prozessen weiterverarbeiten.

Beispiel 2:

Poly-(4-methyl-1-penten) wurde in einem Extruder stufenweise bei von 270°C auf 290°C ansteigenden Temperaturen aufgeschmolzen und mittels einer Zahnradpumpe kontinuierlich einem dynamischen Mischer zugeführt. Das Lösemittelsystem, bestehend aus 70 Gew.-% Dioctyladipat und 15 Gew.-% Glycerintriacetat und 15 Gew.-% Rizinusöl, wurde mittels einer Dosierpumpe ebenfalls dem Mischer zugeführt, in dem das Polymer zusammen mit dem Lösemittelsystem bei einer Temperatur von 290°C zu einer homogenen Lösung mit einer Polymerkonzentration von 35 Gew.-% und einer Konzentration des Lösemittelsystems von 65 Gew.-% verarbeitet wurde. Diese Lösung wurde einer Hohlfadendüse mit einem Aussendurchmesser des Ringspalts von 1,2 mm zugeführt und oberhalb der Phasentrenntemperatur bei 250°C zu einem Hohlfaden extrudiert. Als Innenfüllung wurde Stickstoff verwendet. Nach einer Luftstrecke von 5 mm durchlief der Hohlfaden ein ca. 1 m langes Spinnrohr, welches von dem auf Raumtemperatur temperiertem Abkühlmedium durchströmt wurde. Als Abkühlmedium wurde Glycerintriacetat eingesetzt. Der infolge der Abkühlung im Spinnrohr verfestigte Hohlfaden wurde mit einer Abzugsgeschwindigkeit von 72 m/min aus dem Spinnrohr abgezogen, auf eine Spule aufgewickelt, anschließend zunächst mit Isopropanol extrahiert und danach bei ca. 120°C getrocknet.

Es wurde eine Hohlfasermembran mit einem Aussendurchmesser von 411 µm, einer Wandstärke von 94 µm sowie einer Porosität von 56,5 Vol.-% erhalten. Die Membran wies an ihrer Außenseite eine Trennschicht auf, wobei entsprechend der REM-Untersuchung der äußeren Oberfläche bei einer Vergrößerung von 60 000 keine Poren feststellbar waren. Für die Membran gemäß diesem Beispiel wurde ein $CO_2$-Fluss von 6,21 ml/(cm$^{2*}$min$^*$bar) ein $N_2$-Fluss von 0,66 ml/(cm$^{2*}$min$^*$bar) sowie ein Gastrennfaktor $\alpha(CO_2/N_2)$ von 9,4 ermittelt. Die Membran wies eine Plasmadurchbruchzeit von mehr als 72 Stunden auf. Nach Erreichen dieser Zeit wurde die Prüfung abgebrochen.

Beispiel 3:

Es wurde eine Hohlfasermembran wie in Beispiel 2 hergestellt, wobei als Lösemittelsystem eine Mischung aus 70 Gew.-% Dioctyladipat, 20 Gew.-% Glycerintriacetat und 10 Gew.-% Rizinusöl und als Abkühlmedium eine Mischung aus Dioctyladipat/Glycerintriacetat/Rizinusöl im Verhältnis 20/75/5 Gew.-% eingesetzt wurde. Die Polymerkonzentration der Lösung betrug 37 Gew.-%, die Düsentemperatur 247°C.

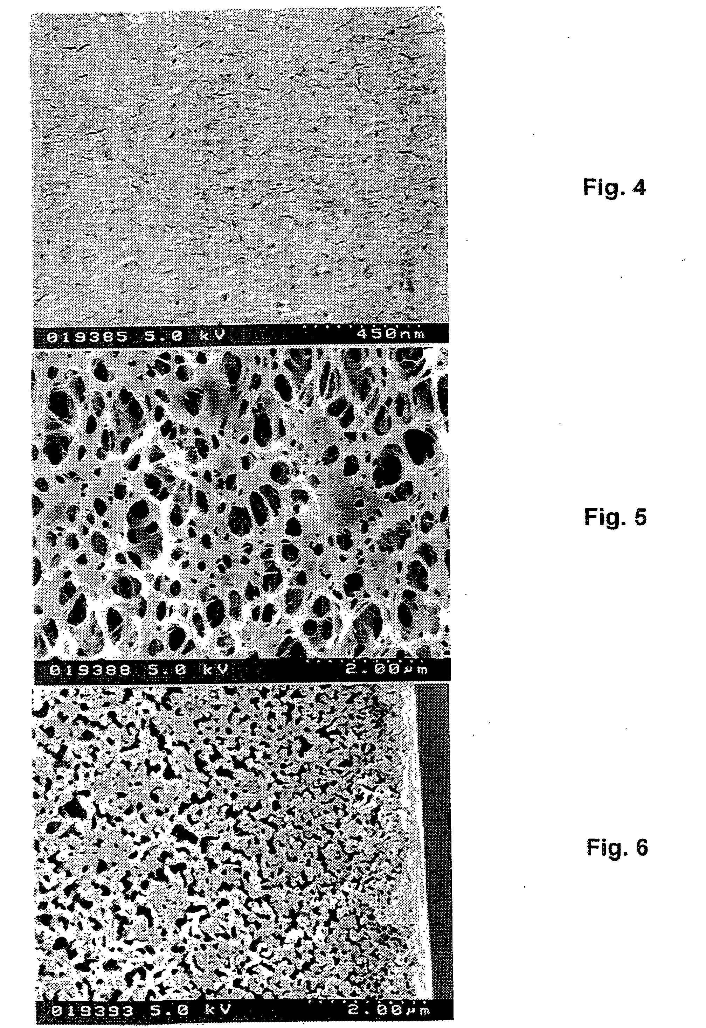

Es wurde eine Hohlfasermembran mit einem Außendurchmesser von 388 µm und einer Wandstärke von 97 µm erhalten, für die bei rasterelektronischer (REM-) Untersuchung bei einer Vergrößerung von 60 000 an ihrer äußeren Oberfläche einzelne Poren mit einer Größe kleiner ca. 20 nm feststellbar waren (Fig. 4). Die innere, dem Lumen zugewandte Oberfläche wies eine offenporige netzwerkartige Struktur mit näherungsweise kreisförmigen Öffnungen auf (Fig. 5). Im Bruchbild einer Bruchfläche senkrecht zur Längsachse der Hohlfasermembran war eine schwammartige, offenporige mikroporöse Stützstruktur erkennbar, die von einer geschlossenen Trennschicht mit einer Dicke von ca. 0,2 µm abgedeckt wurde (Fig. 6). Für die Membran gemäß diesem Beispiel wurde ein $CO_2$-Fluss von 53,41 ml/(cm$^{2*}$min$^*$bar), ein $N_2$-Fluss von 51,11 ml/(cm$^{2*}$min$^*$bar) sowie ein Gastrennfaktor $\alpha(CO_2/N_2)$ von 1,05 ermittelt. Die Bruchkraft der Membran betrug 92 cN, die Bruchdehnung 132 %. Die Membran wies eine Plasmadurchbruchzeit von mehr als 72 Stunden auf. Nach Erreichen dieser Zeit wurde die Prüfung abgebrochen.

Beispiel 4:

Es wurde eine Membran hergestellt, wie in Beispiel 2 beschrieben. Als Lösemittelsystem wurde eine Mischung aus 70 Gew.-% Dioctyladipat, 15 Gew.-% Glycerintriacetat und 15 Gew.-% Rizinusöl und als Abkühlmedium eine Mischung aus 37,3 Gew.-% Dioctyladipat, 48,2 Gew.-% Glycerintriacetat und 14,5 Gew.-% Rizinusöl eingesetzt. Die Membran gemäß diesem Beispiel mit einem Außendurchmesser von 390 μm und einer Wandstärke von 93,5 μm wies ähnlich wie die Membran des Beispiels 1 ausweislich der REM-Aufnahmen eine äussere Oberfläche ohne Poren und eine innere, dem Lumen zugewandte Oberfläche mit einer offenporigen netzwerkartigen Struktur mit näherungsweise kreisförmigen Öffnungen auf. Die schwammartige, offenporige mikroporöse Stützstruktur war von einer geschlossenen Trennschicht mit einer Dicke von ca. 0,4 μm abgedeckt. Die Membran wies eine Plasmadurchbruchzeit von 46 Stunden auf.

Beispiel 5:

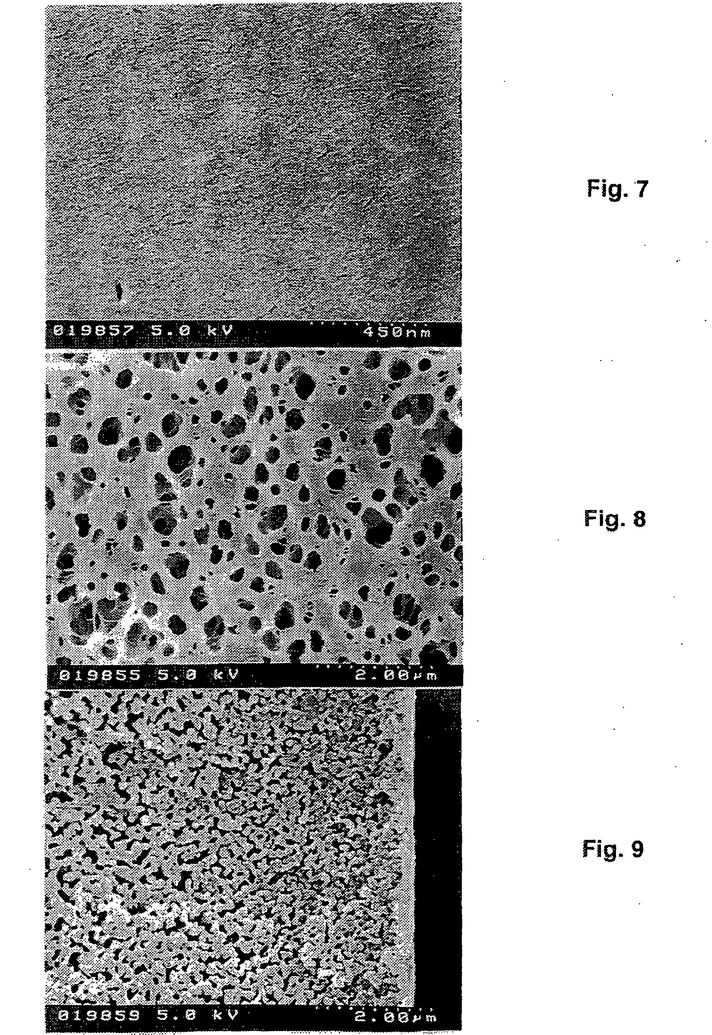

Es wurde wie in Beispiel 2 vorgegangen. Als Lösemittelsystem wurde eine Mischung aus 80 Gew.-% Dioctyladipat und 20 Gew.-% Rizinusöl und als Abkühlmedium Glycerintriacetat eingesetzt. Die Düsentemperatur betrug 240°C.
Die Membran wies an ihrer äusseren Oberfläche vereinzelt Poren bis zu einer Größe von ca. 50 nm auf (Fig. 7). Die innere, dem Lumen zugewandte Oberfläche wies eine offenporige netzwerkartige Struktur mit näherungsweise kreisförmigen Öffnungen auf (Fig. 8). Die schwammartige, offenporige mikroporöse Stützstruktur war von einer geschlossenen Trennschicht mit einer Dicke von ca. 0,2 μm abgedeckt (Fig. 9). Die Membran wies einen Innendurchmesser von 209 μm, eine Wandstärke von 90 μm, eine Bruchkraft von 96 cN, eine Bruchdehnung von 123%, einen $CO_2$-Fluss von 42,64 ml/(cm$^{2*}$min$^*$bar) und einen Gastrennfaktor $\alpha(CO_2/N_2)$ von 1 auf. Die Plasmadurchbruchzeit betrug mehr als 72 Stunden. Nach Erreichen dieser Zeit wurde die Prüfung abgebrochen.

Beispiel 6:

Es wurde wie in Beispiel 2 vorgegangen. Als Lösemittelsystem wurde eine Mischung aus 75 Gew.-% des als starker Löser wirkenden Isopropylmyristats und 25 Gew.-% Rizinusöl und als Abkühlmedium Glycerintriacetat eingesetzt. Die Düsentemperatur betrug 220 °C.
Die Membran wies an ihrer äusseren Oberfläche einzelne Poren bis zu einer Größe von ca. 50 nm auf. Die Stützstruktur war von einer geschlossenen Trennschicht mit einer Dicke von ca. 0,2 μm abgedeckt. Die Plasmadurchbruchzeit war größer als 72 Stunden.

Beispiel 7:

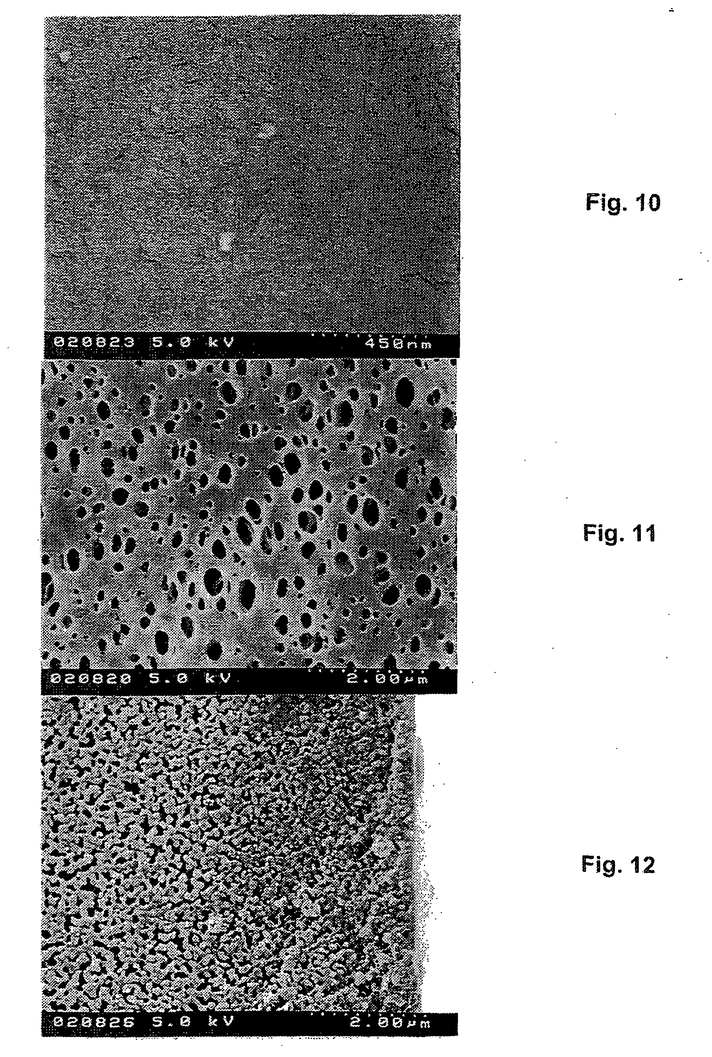

Es wurde wie in Beispiel 2 vorgegangen, wobei als Lösemittelsystem eine Mischung aus 70 Gew.-% Dioctyladipat, 20 Gew.-% Glycerintriacetat und 10 Gew.-% Rizinusöl und als Abkühlmedium eine Mischung aus 65 Gew.-% Glycerin und 35 Gew.-% Wasser verwendet wurde. In diesem Fall war das Abkühlmedium nicht mit dem Lösemittelsystem mischbar. Die Düsentemperatur betrug 235 °C, der Luftspalt 20 mm.
Die hierbei erhaltene Hohlfasermembran hatte einen Innendurchmesser von 203 μm, eine Wandstärke von 90 μm und eine Porosität von 57 Vol.-%. Die Membran wies einen $CO_2$-Fluss von 13,17 ml/(cm$^{2*}$min$^*$bar), einen $N_2$-Fluss von 2,98 ml/(cm$^{2*}$min$^*$bar) sowie eine Trennschicht an ihrer äußeren Oberfläche mit einem Gastrennfaktor $\alpha(CO_2/N_2)$ von 4,42 auf. Für die Membran gemäß diesem Beispiel waren in der rasterelektronischen (REM-) Untersuchung auch bei einer Vergrößerung von 60 000 an ihrer äußeren Oberfläche keine Poren feststellbar (Fig. 10), wohingegen die innere, dem Lumen zugewandte Oberfläche eine offenporige netzwerkartige Struktur mit näherungsweise kreisförmigen Öffnungen aufwies (Fig. 11). Im Bruchbild einer Bruchfläche senkrecht zur Längsachse der Hohlfasermembran war eine schwammartige, offenporige mikroporöse Stützstruktur erkennbar, die von einer sehr dünnen Trennschicht mit einer Dicke von ca. 0,1 μm abgedeckt wurde (Fig. 12). Es wurden Plasmadurchbruchzeiten von länger als 72 Stunden ermittelt.

Vergleichsbeispiel 1:

Es wurde eine Membran wie in Beispiel 2 hergestellt, wobei als Lösemittelsystem eine Mischung aus 80 Gew.-% Dioctyladipat und 20 Gew.-% Rizinusöl verwendet wurde. Die erhaltene Lösung hatte einen Anteil an Poly-(4-methyl-1-penten) von 47 Gew.-%. Die Düsentemperatur betrug 248°C und wies damit eine Temperatur oberhalb der Entmischungstemperatur auf. Als Abkühlmedium wurde auf Raumtemperatur temperiertes Dioctyladipat eingesetzt, d.h. die gleiche Verbindung, die auch als Verbindung A, d.h. als Löser diente.

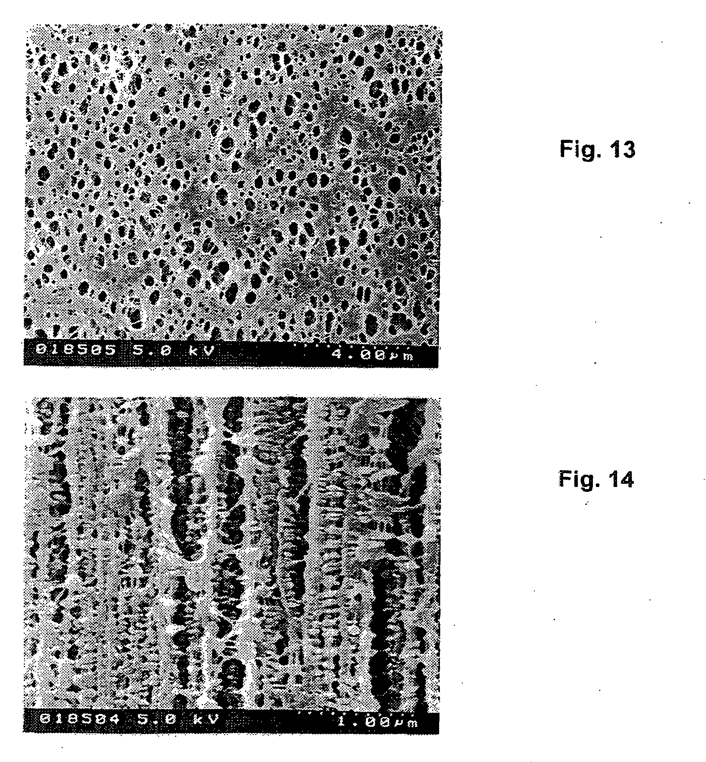

Die fertige Membran hatte einen Außendurchmesser von 390 μm, eine Wandstärke von 97 μm und eine Porosität von 45 Vol.-%. Ausweislich der REM-Aufnahmen war die äußere Oberfläche der Membran offenporig mit zahlreichen Poren größer als 0,1 μm (Fig. 14). Die dem Lumen zugewandte Oberfläche war offenporig mit näherungsweise kreisförmigen Poren (Fig. 13). Die Membran wies einen $CO_2$-Fluss von 17,54 ml/(cm$^{2*}$min$^*$bar), einen $N_2$-Fluss von 20,30 ml/(cm$^{2*}$min$^*$bar) sowie einen Gastrennfaktor $\alpha(CO_2/N_2)$ von 0,86 auf.

Vergleichsbeispiel 2:

Es wurde eine Membran wie in Beispiel 2 hergestellt, wobei als Lösemittelsystem eine Mischung aus 90 Gew.-% Isopropylmyristat und 10 Gew.-% Rizinusöl verwendet wurde. Der Polymeranteil in der erhaltenen Lösung betrug 47 Gew.-%. Die Temperatur der Düse war auf 248°C eingestellt. Als Abkühlmedium diente eine auf Raumtemperatur temperierte Mischung aus 80 Gew.-% Dioctyladipat und 20 Gew.-% Rizinusöl, womit das Abkühlmedium in bezug auf die Polymerkomponente Poly-(4-methyl-1-penten) ein Löser war.

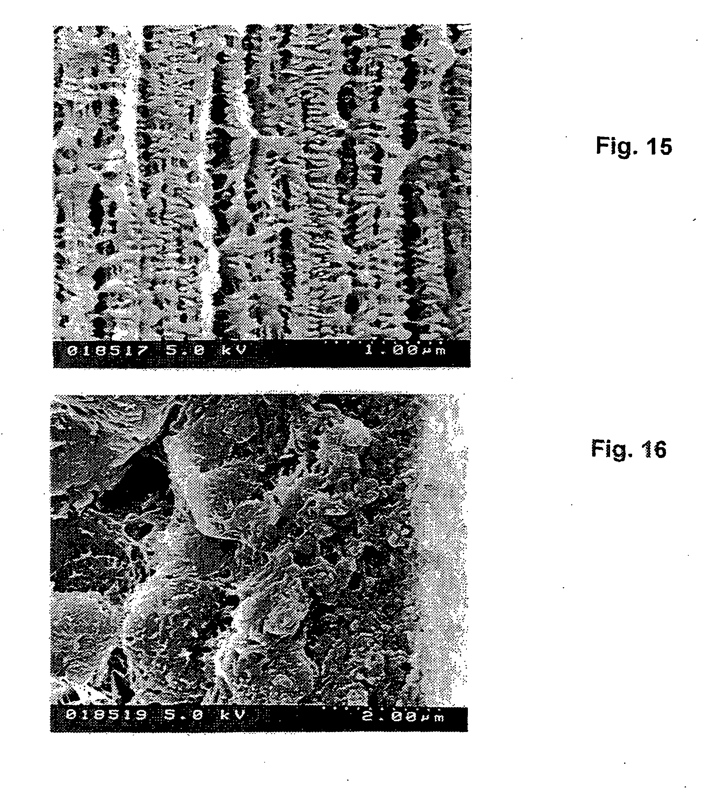

Die Membran gemäß diesem Vergleichsbeispiel hatte einen Aussendurchmesser von 390 μm, eine Wandstärke von 97 μm und eine Porosität von ca. 45 Vol.-%. Ausweislich der REM-Aufnahmen war die äussere Oberfläche der Membran offenporig mit zahlreichen Poren größer als 100 nm (Fig. 15). Die angrenzende Stützstruktur wies eine ausgeprägt partikuläre Struktur auf und schwammartige poröse Strukturen waren nicht feststellbar (Fig. 16). Die Membran wies einen $CO_2$-Fluss von 138 ml/(cm$^{2*}$min$^*$bar), einen $N_2$-Fluss von 150 ml/(cm$^{2*}$min$^*$bar) sowie einen Gastrennfaktor $\alpha(CO_2/N_2)$ von 0,92 auf.

Vergleichsbeispiel 3:

Es wurde eine Lösung hergestellt, enthaltend 44 Gew.-% Polypropylen und 56 Gew.-% eines Lösemittelsystems, bestehend aus 75 Gew.-% Sojaöl als Verbindung A und 25 Gew.-% Rizinusöl als Verbindung B, wobei Sojaöl in Bezug auf Polypropylen nicht als starker Löser einzustufen ist. Die Lösung wurde bei 235°C durch eine Hohlfadendüse extrudiert und der extrudierte Hohlfaden nach Durchlaufen eines Luftspalts von 5 mm Länge durch ein Spinnrohr geleitet, in dem sich ein Abkühlmedium befand, das aus 75 Gew.-% Sojaöl und 35 Gew.-% Rizinusöl bestand, d.h. der gleichen Kombination, die auch als Lösemittelsystem verwendet wurde.

Diese Lösung wurde durch eine Hohlfadendüse mit einem Ringspalt von 0,3 mm Breite extrudiert und zu Hohlfäden ausgebildet. Als Innenfüllung wurde Stickstoff eingesetzt. Die Düse hatte eine Temperatur von 235°C. Nach einer Luftstrecke von ca. 5 mm durchliefen die Hohlfäden ein vom auf 40°C temperierten Abkühlmedium durchströmtes, 2 m langes Spinnrohr. Die Durchströmgeschwindigkeit des Abkühlmediums war der Spinngeschwindigkeit angepaßt und betrug ca. 90 m/min. Infolge der Abkühlung im Spinnrohr kam es zur Phasenseparation und zur Verfestigung der Hohlfäden, so daß diese kontinuierlich aus dem Spinnrohr abgezogen werden konnten. Anschließend wurden die Hohlfäden zur Entfernung des Lösemittelsystems 6 Stunden bei 60°C in Isopropanol extrahiert und die so erhaltenen Hohlfasermembranen nachfolgend bei 120°C während 6 sec. getrocknet. Während der Trocknung erfolgte eine Verstreckung um ca. 5%.

Die gemäß diesem Vergleichsbeispiel erhaltenen Hohlfasermembranen besaßen einen Aussendurchmesser von 375 μm, eine Wandstärke von 55 μm sowie eine Volumenporosität von 44,5 Vol.-%. Sie wiesen auch an ihrer Aussenseite eine offenporige Struktur auf mit zahlreichen Poren einer Größe von mehr als 0,1 μm in der äußeren Oberfläche. Es wurde für diese Membran ein $CO_2$-Fluss von 49,25 ml/(cm$^{2*}$min$^*$bar), ein $N_2$-Fluss von 56,45 ml/(cm$^{2*}$min$^*$bar) sowie ein Gastrennfaktor $\alpha(CO_2/N_2)$ von 0,87 ermittelt. Als Folge davon sind die Plasmadurchbruchzeiten der Membranen gemäß diesem Vergleichsbeispiel mit 3-5 Stunden nur gering und die Membranen daher für einen Langzeiteinsatz nicht geeignet.

Vergleichsbeispiele 4 und 5:

25 Gew.-% Poly(4-methyl-1-penten) wurden bei 255°C in 75 Gew.-% einer Mischung aus 90 Gew.-% Isopropylmyristat und 10 Gew.-% Glycerinmonoacetat, d.h. entsprechend der Definition der vorliegenden Erfindung einer Mischung aus einem starken Löser und einem starken Nichtlöser, gelöst. Die auf 255°C temperierte homogene und klare Lösung wurde mittels eines Rakels auf eine auf Raumtemperatur gehaltene Glasplatte aufgerakelt, wobei zwischen Rakel und Glasplatte ein Abstand von 250 μm eingestellt war. Der abgekühlte poröse Polymerfilm wurde mit Isopropanol extrahiert und anschließend bei Raumtemperatur getrocknet.

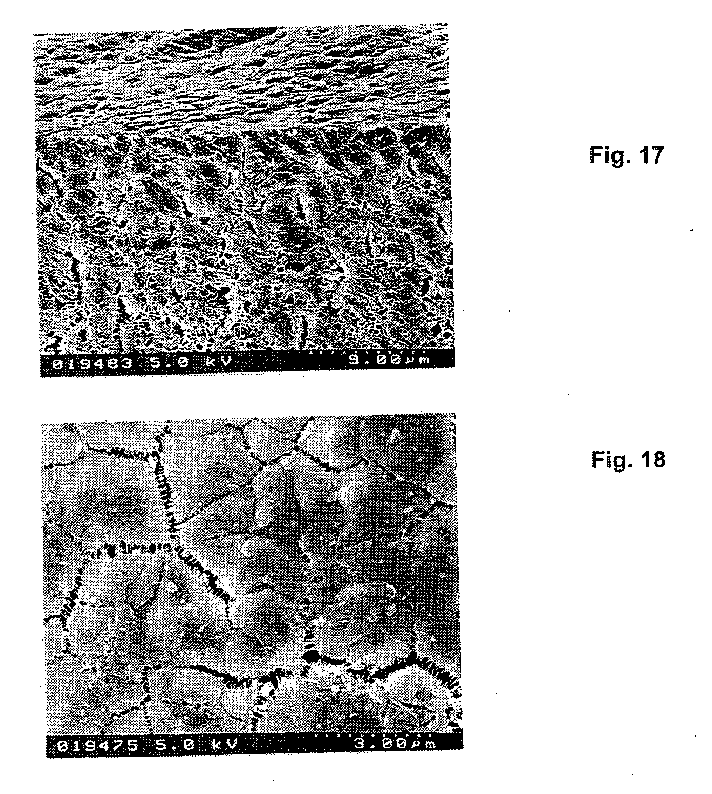

Die erhaltene Flachmembran wies über ihrer Dicke eine ausgeprägte kompakte und z.T. partikuläre Struktur mit dazwischen liegenden Porenkanälen auf (Fig. 17), die sich bis zu der Oberfläche, die während der Herstellung der Glasseite zugewandt war, erstrecken und dort Poren mit z.T. Größen oberhalb von 0,1 μm ausbilden (Fig. 18). Eine Trennschicht war nicht erkennbar.

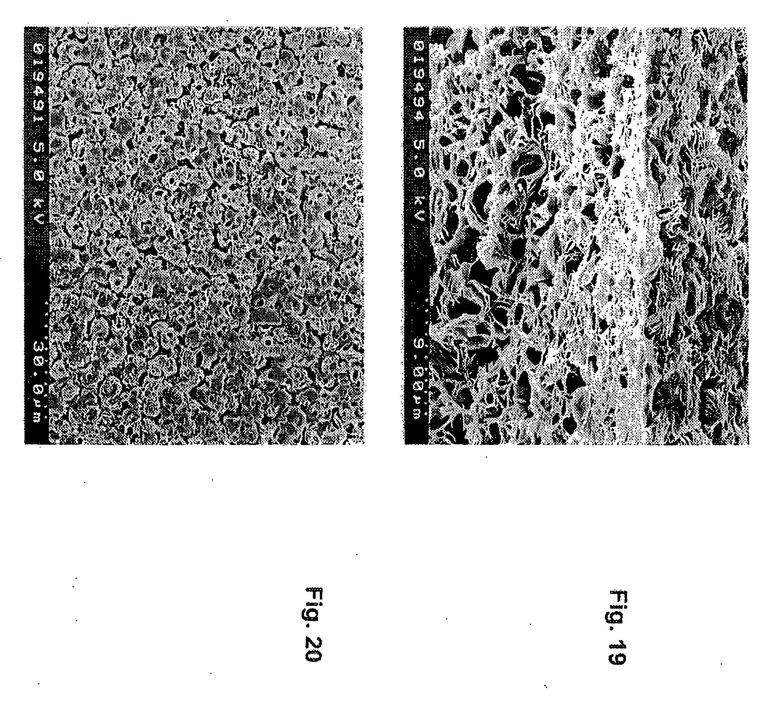

Bei Ausrakelung der Polymerlösung auf eine auf 100°C beheizte Glasplatte ergaben sich im Bereich der Membranwand offenporigere Strukturen. Es ist jedoch in der REM-Aufnahme der Bruchkante ebenfalls keine Trennschicht erkennbar, wobei die REM-Aufnahme die Bruchkante zwischen Membranwand und derjenigen Oberfläche wiedergibt, die während der Membranherstellung der Glasseite zugewandt war (Fig. 19). Diese Oberfläche ist deutlich offenporig mit Poren im Mikrometerbereich (Fig. 20).

**Patentansprüche**

1. Verfahren zur Herstellung einer integral asymmetrischen hydrophoben Membran mit einer schwammartigen, offenporigen mikroporösen Stützstruktur und einer Trennschicht mit gegenüber der Stützstruktur dichterer Struktur, wobei das Verfahren mindestens die Schritte umfasst:

   a) Herstellung einer homogenen Lösung von 20-90 Gew.-% einer Polymerkomponente aus mindestens einem Polymer, ausgewählt aus der Gruppe der Polyolefine, in 80-10 Gew.-% eines Lösemittelsystems, enthaltend eine Verbindung A und eine Verbindung B, welche bei der Lösetemperatur flüssig und miteinander mischbar sind, wobei das eingesetzte Gemisch aus Polymerkomponente, Verbindung A und Verbindung B eine kritische Entmischungstemperatur und eine Erstarrungstemperatur aufweist und unterhalb der kritischen Entmischungstemperatur im flüssigen Aggregatzustand eine Mischungslücke, und wobei als Verbindung A ein Löser für die Polymerkomponente ausgewählt wird und die Verbindung B die Entmischungstemperatur einer Lösung, bestehend aus der Polymerkomponente und der Verbindung A, heraufsetzt,
   b) Ausformen der Lösung zu einem Formkörper mit einer ersten Oberfläche und einer zweiten Oberfläche in einem Formwerkzeug, welches eine Werkzeugtemperatur oberhalb der kritischen Entmischungstemperatur aufweist,
   c) Abkühlung des Formkörpers mittels eines Abkühlmediums, welches auf eine Abkühltemperatur unterhalb der Erstarrungstemperatur temperiert ist, mit einer solchen Geschwindigkeit, dass eine thermodynamische Nichtgleichgewichts-flüssig-flüssig-Phasentrennung in eine polymerreiche und eine polymerarme Phase und anschließend bei Unterschreiten der Erstarrungstemperatur Erstarrung der polymerreichen Phase erfolgt,
   d) gegebenenfalls Entfernen der Verbindungen A und B aus dem Formkörper, **dadurch gekennzeichnet, dass** als Verbindung A ein starker Löser für die Polymerkomponente ausgewählt wird, für den die Entmischungstemperatur einer Lösung von 25 Gew.-% der Polymerkomponente in diesem Löser um mindestens 10% unter dem Schmelzpunkt der reinen Polymerkomponente liegt, dass als Verbindung B ein schwacher Nichtlöser für die Polymerkomponente ausgewählt wird, welcher die Polymerkomponente beim Erwärmen bis zu seinem Siedepunkt nicht zu einer homogenen Lösung auflöst und für den die Entmischungstemperatur eines Systems, bestehend aus 25 Gew.-% der Polymerkomponente, 10 Gew.-% des schwachen Nichtlösers und 65 Gew.-% der als Löser eingesetzten Verbindung A, um höchstens 8 % über der Entmischungstemperatur eines Systems aus 25 Gew.-% der Polymerkomponente und 75 Gew.-% der Verbindung A liegt und dass der Formkörper zur Abkühlung mit einem flüssigen Abkühlmedium in Kontakt gebracht wird, welches ein Nichtlöser für die Polymerkomponente ist, der die Polymerkomponente bei Erwärmen bis zu seinem Siedepunkt nicht zu einer homogenen Lösung löst, und welches chemisch nicht mit der Polymerkomponente reagiert.

2. Verfahren nach Anspruch 1, **dadurch gekennzeichnet, dass** das Abkühlmedium eine Flüssigkeit ist, die ein starker Nichtlöser für die Polymerkomponente ist, für den die Entmischungstemperatur eines Systems, bestehend aus 25 Gew.-% der Polymerkomponente, 10 Gew.-% des starken Nichtlösers und 65 Gew.-% der als Löser eingesetzten Verbindung A, um mindestens 10 % über der Entmischungstemperatur eines Systems aus 25 Gew.-% der Polymerkomponente und 75 Gew.-% der Verbindung A liegt.

3. Verfahren nach einem oder mehreren der Ansprüche 1 oder 2, **dadurch gekennzeichnet, dass** das Abkühlmedium eine bei der Abkühltemperatur homogene, einphasige Flüssigkeit ist.

4. Verfahren nach einem oder mehreren der Ansprüche 1 bis 3, **dadurch gekennzeichnet, dass** das Abkühlmedium eine Temperatur aufweist, die mindestens 100°C unterhalb der kritischen Entmischungstemperatur liegt.

5. Verfahren nach einem oder mehreren der Ansprüche 1 bis 4, **dadurch gekennzeichnet, dass** 30-60 Gew.-% der Polymerkomponente in 70-40 Gew.-% des Lösemittelsystems gelöst werden.

6. Verfahren nach einem oder mehreren der Ansprüche 1 bis 5, **dadurch gekennzeichnet, dass** das die Polymerkomponente ausbildende mindestens eine Polymer ein ausschließlich aus Kohlenstoff und Wasserstoff bestehendes Polyolefin ist.

7. Verfahren nach Anspruch 6, **dadurch gekennzeichnet, dass** das mindestens eine Polyolefin ein Poly-(4-methyl-1-penten) ist.

8. Verfahren nach Anspruch 6, **dadurch gekennzeichnet, dass** das mindestens eine Polyolefin ein Polypropylen ist.

9. Verfahren nach Anspruch 6, **dadurch gekennzeichnet, dass** das mindestens eine Polyolefin eine Mischung aus einem Poly-(4-methyl-1-penten) und einem Polypropylen ist.

10. Verfahren nach Anspruch 7, **dadurch gekennzeichnet, dass** als Verbindung A Dioctyladipat, Isopropylmyristat, Diphenylether, Dibenzylether oder eine Mischung hieraus verwendet wird.

11. Verfahren nach Anspruch 7, **dadurch gekennzeichnet, dass** als Verbindung B Glycerintriacetat, Diethylphthalat, Rizinusöl, N,N-Bis(2-hydroxyethyl)talgfettamin, Sojaöl oder eine Mischung hieraus verwendet wird.

12. Verfahren nach Anspruch 8, **dadurch gekennzeichnet, dass** als Verbindung A Dioctyladipat, Isopropylmyristat oder eine Mischung hieraus verwendet wird.

13. Verfahren nach Anspruch 8, **dadurch gekennzeichnet, dass** als Verbindung B Diethylphthalat, Glycerintriacetat, Rizinusöl, Gycerindiacetat oder eine Mischung hieraus verwendet wird.

14. Verfahren nach einem oder mehreren der Ansprüche 1 bis 13 zur Herstellung einer Hohlfasermembran.

15. Hydrophobe integral asymmetrische Membran insbesondere zum Gasaustausch, die im wesentlichen aus mindestens einem Polymer, ausgewählt aus der Gruppe der Polyolefine, zusammengesetzt ist und eine erste und eine zweite Oberfläche besitzt, wobei die Membran eine Stützschicht mit einer schwammartigen, offenporigen mikroporösen Struktur aufweist und zu dieser Stützschicht benachbart an mindestens einer ihrer Oberflächen eine Trennschicht mit dichterer Struktur, **dadurch gekennzeichnet, dass** die Trennschicht höchstens Poren mit einem mittleren Durchmesser <100 nm aufweist, dass die Stützschicht frei von Makrovoids ist und die Poren in der Stützschicht im Mittel im wesentlichen isotrop sind, dass die Membran eine Porosität im Bereich von größer als 30 Vol.-% bis kleiner 75 Vol.-% und einen Gastrennfaktor $\alpha(CO_2/N_2)$ von mindestens 1 aufweist.

16. Membran nach Anspruch 15, **dadurch gekennzeichnet, dass** die Membran an ihrer ersten Oberfläche eine Trennschicht aufweist und die zweite Oberfläche auf der gegenüberliegenden Seite der Stützschicht eine offenporige netzwerkartige Struktur mit näherungsweise kreisförmigen Öffnungen besitzt.

17. Membran nach einem oder mehreren der Ansprüche 15 oder 16, **dadurch gekennzeichnet, dass** sich die Membranstruktur beim Übergang von der Trennschicht zur Stützschicht abrupt ändert.

18. Membran nach einem oder mehreren der Ansprüche 15 bis 17, **dadurch gekennzeichnet, dass** der Gastrennfaktor $\alpha(CO_2/N_2)$ mindestens 2 beträgt.

19. Membran nach einem oder mehreren der Ansprüche 15 bis 18, **dadurch gekennzeichnet, dass** die Trennschicht eine Dicke zwischen 0,01 µm und 5 µm aufweist.

20. Membran nach Anspruch 19, **dadurch gekennzeichnet, dass** die Trennschicht eine Dicke zwischen 0,1 µm und 2 µm aufweist.

21. Membran nach einem oder mehreren der Ansprüche 15 bis 20, **dadurch gekennzeichnet, dass** die Porosität im Bereich von größer als 50 Vol.-% bis kleiner als 75 Vol.-% liegt.

22. Membran nach einem oder mehreren der Ansprüche 15 bis 21, **dadurch gekennzeichnet, dass** die Membran eine Plasmadurchbruchzeit von mindestens 20 Stunden aufweist.

23. Membran nach Anspruch 22, **dadurch gekennzeichnet, dass** die Plasmadurchbruchzeit mindestens 48 Stunden beträgt.

24. Membran nach einem oder mehreren der Ansprüche 15 bis 23, **dadurch gekennzeichnet, dass** das mindestens eine Polymer ein ausschließlich aus Kohlenstoff und Wasserstoff bestehendes Polyolefin ist.

**25.** Membran nach Anspruch 24, **dadurch gekennzeichnet, dass** das Polyolefin ein Poly-(4-methyl-1-penten) ist.

**26.** Membran nach Anspruch 24, **dadurch gekennzeichnet, dass** das Polyolefin ein Polypropylen ist.

**27.** Membran nach Anspruch 24, **dadurch gekennzeichnet, dass** die Membran im wesentlichen aus einer Mischung aus einem Poly-(4-methyl-1-penten) und einem Polypropylen zusammengesetzt ist.

**28.** Membran nach einem oder mehreren der Ansprüche 15 bis 27, **dadurch gekennzeichnet, dass** die Membran einen Gasfluss $Q(CO_2)$ von mindestens 5 ml/(cm$^{2*}$min$^*$bar) aufweist.

**29.** Membran nach einem oder mehreren der Ansprüche 15 bis 28, **dadurch gekennzeichnet, dass** die Membran eine Hohlfasermembran ist.

**30.** Membran nach einem oder mehreren der Ansprüche 15 bis 29, herstellbar nach einem Verfahren gemäß einem oder mehreren der Ansprüche 1 bis 14.

**31.** Verwendung der Membran nach einem oder mehreren der Ansprüche 15 bis 30 zum Gastransfer.

**32.** Verwendung der Membran nach einem oder mehreren der Ansprüche 15 bis 30 zur Oxygenation von Blut.

**Claims**

**1.** Process for producing an integrally asymmetrical hydrophobic membrane having a sponge-like, open-pored, microporous support structure and a separation layer with a denser structure compared to the support structure, the process comprising at least the steps of:

a) preparing a homogeneous solution of 20-90% by weight of a polymer component consisting of at least one polymer, selected from the group of polyolefins, in 80-10% by weight of a solvent system containing a compound A and a compound B that are liquid and miscible with each other at the dissolving temperature, wherein the employed mixture of the polymer component and compounds A and B has a critical demixing temperature and a solidification temperature and has a miscibility gap in the liquid state of aggregation below the critical demixing temperature, and wherein a solvent for the polymer component is selected for compound A, and compound B raises the demixing temperature of a solution consisting of the polymer component and compound A,
b) rendering the solution to form a shaped object, with first and second surfaces, in a die having a temperature above the critical demixing temperature,
c) cooling the shaped object using a cooling medium, tempered to a cooling temperature below the solidification temperature, at such a rate that a thermodynamic non-equilibrium liquid-liquid phase separation into a high-polymer-content phase and a low-polymer-content phase takes place and solidification of the high-polymer-content phase subsequently occurs when the temperature falls below the solidification temperature,
d) possibly removing compounds A and B from the shaped object, **characterized in that** a strong solvent for the polymer component is selected for compound A, for which the demixing temperature of a solution of 25% by weight of the polymer component in this solvent is at least 10% below the melting point of the pure polymer component, that a weak non-solvent for the polymer component is selected for compound B, which does not dissolve the polymer component to form a homogeneous solution on heating up to the boiling point of compound B and for which the demixing temperature of a system consisting of 25% by weight of the polymer component, 10% by weight of the weak non-solvent, and 65% by weight of compound A, used as the solvent, is at most 8% above the demixing temperature of a system consisting of 25% by weight of the polymer component and 75% by weight of compound A, and that, for cooling, the shaped object is brought into contact with a liquid cooling medium that is a non-solvent for the polymer component, does not dissolve the polymer component to form a homogeneous solution on heating up to the boiling point of the cooling medium, and does not react chemically with the polymer component.

**2.** Process according to Claim 1, **characterized in that** the cooling medium is a liquid that is a strong non-solvent for the polymer component, for which non-solvent the demixing temperature of a system consisting of 25% by weight of the polymer component, 10% by weight of the strong non-solvent, and 65% by weight of compound A, used as a solvent, is at least 10% higher than the demixing temperature of a system consisting of 25% by weight of the polymer component and 75% by weight of compound A.

3. Process according to one or more of Claims 1 or 2, **characterized in that** the cooling medium is a homogeneous, single-phase liquid at the cooling temperature.

4. Process according to one or more of Claims 1 to 3, **characterized in that** the cooling medium has a temperature that is at least 100°C below the critical demixing temperature.

5. Process according to one or more of Claims 1 to 4, **characterized in that** 30-60% by weight of the polymer component is dissolved in 70-40% by weight of the solvent system.

6. Process according to one or more of Claims 1 to 5, **characterized in that** the at least one polymer forming the polymer component is a polyolefin consisting exclusively of carbon and hydrogen.

7. Process according to Claim 6, **characterized in that** the at least one polyolefin is a poly(4-methyl-1-pentene).

8. Process according to Claim 6, **characterized in that** the at least one polyolefin is a polypropylene.

9. Process according to Claim 6, **characterized in that** the at least one polyolefin is a mixture of a poly(4-methyl-1-pentene) and a polypropylene.

10. Process according to Claim 7, **characterized in that** dioctyl adipate, isopropyl myristate, diphenyl ether, dibenzyl ether, or a mixture thereof is used as compound A.

11. Process according to Claim 7, **characterized in that** glycerin triacetate, diethyl phthalate, castor oil, N,N-bis(2-hydroxyethyl)tallow amine, soybean oil, or a mixture thereof is used as compound B.

12. Process according to Claim 8, **characterized in that** dioctyl adipate, isopropyl myristate, or a mixture thereof is used as compound A.

13. Process according to Claim 8, **characterized in that** diethyl phthalate, glycerin triacetate, castor oil, glycerin diacetate, or a mixture thereof is used as compound B.

14. Process according to one or more of Claims 1 to 13 for producing a hollow-fiber membrane.

15. Hydrophobic integrally asymmetrical membrane, in particular for gas exchange, composed substantially of at least one polymer selected from the group of polyolefins and having first and second surfaces, the membrane having a support layer with a sponge-like, open-pored, microporous structure and adjacent to this support layer on at least one of its surfaces a separation layer with denser structure, **characterized in that** the pores, if any, in the separation layer have an average diameter <100 nm, that the support layer is free of macrovoids and the pores in the support layer are on average substantially isotropic, and that the membrane has a porosity in the range from greater than 30% to less than 75% by volume and a gas separation factor $\alpha(CO_2/N_2)$ of at least 1.

16. Membrane according to Claim 15, **characterized in that** the first surface of the membrane has a separation layer and the second surface on the opposite side of the support layer has an open-pored, network-like structure with approximately circular openings.

17. Membrane according to one or more of Claims 15 or 16, **characterized in that** the membrane structure changes abruptly in the transition from the separation to the support layer.

18. Membrane according to one or more of Claims 15 to 17, **characterized in that** the gas separation factor $\alpha(CO_2/N_2)$ is at least 2.

19. Membrane according to one or more of Claims 15 to 18, **characterized in that** the separation layer has a thickness between 0.01 µm and 5 µm.

20. Membrane according to Claim 19, **characterized in that** the separation layer has a thickness between 0.1 µm and 2 µm.

**21.** Membrane according to one or more of Claims 15 to 20, **characterized in that** the porosity is in the range from greater than 50% to less than 75% by volume.

**22.** Membrane according to one or more of Claims 15 to 21, **characterized in that** the membrane has a plasma breakthrough time of at least 20 hours.

**23.** Membrane according to Claim 22, **characterized in that** the plasma breakthrough time is at least 48 hours.

**24.** Membrane according to one or more of Claims 15 to 23, **characterized in that** the at least one polymer is a polyolefin consisting exclusively of carbon and hydrogen.

**25.** Membrane according to Claim 24, **characterized in that** the polyolefin is a poly(4-methyl-1 -pentene).

**26.** Membrane according to Claim 24, **characterized in that** the polyolefin is a polypropylene.

**27.** Membrane according to Claim 24, **characterized in that** the membrane is composed substantially of a mixture of a poly(4-methyl-1-pentene) and a polypropylene.

**28.** Membrane according to one or more of Claims 15 to 27, **characterized in that** the membrane has a gas flow Q ($CO_2$) of at least 5 ml/(cm$^2$*min*bar).

**29.** Membrane according to one or more of Claims 15 to 28, **characterized in that** the membrane is a hollow-fiber membrane.

**30.** Membrane according to one or more of Claims 15 to 29, producible using a process according to one or more of Claims 1 to 14.

**31.** Use of the membrane according to one or more of Claims 15 to 30 for gas transfer.

**32.** Use of the membrane according to one or more of Claims 15 to 30 for oxygenation of blood.

**Revendications**

**1.** Procédé de fabrication d'une membrane hydrophobe asymétrique formée d'une seule pièce, comportant une structure microporeuse de soutien, à pores ouverts et de type éponge, et une couche séparatrice dont la structure est plus dense que la structure de soutien, lequel procédé comporte au moins les étapes suivantes:

a) préparer une solution homogène de 20 à 90 % en poids d'un composant polymère, constitué d'au moins un polymère choisi dans l'ensemble des polyoléfines, dans 80 à 10 % en poids d'un système solvant contenant un composé A et un composé B qui sont liquides et miscibles l'un avec l'autre à la température de dissolution, le mélange obtenu à partir du composant polymère, du composé A et du composé B présentant une température critique de démixtion et une température de solidification, ainsi qu'une lacune de miscibilité à l'état liquide, au-dessous de la température critique de démixtion, un solvant du composant polymère étant choisi en tant que composé A et le composé B élevant la température de démixtion d'une solution constituée du composant polymère et du composé A ;
b) mouler la solution pour en faire un corps moulé présentant une première surface et une deuxième surface, dans un outil de moulage qui se trouve à une température supérieure à la température critique de démixtion ;
c) refroidir le corps moulé au moyen d'un milieu réfrigérant, régulé à une température de réfrigération inférieure à la température de solidification, à une vitesse telle qu'il se produit une séparation de phases liquide-liquide, en état de non-équilibre thermodynamique, en une phase riche en polymère et une phase pauvre en polymère, et qu'ensuite, quand la température devient inférieure à la température de solidification, la phase riche en polymère se solidifie ;
d) et le cas échéant, éliminer du corps moulé les composés A et B ;

**caractérisé en ce que** l'on choisit comme composé A un fort solvant du composant polymère, pour lequel la température de démixtion d'une solution à 25 % en poids du composant polymère dans ce solvant est inférieure d'au moins 10 % au point de fusion du composant polymère pur, **en ce que** l'on choisit comme composé B un faible non-solvant du composant polymère, qui, chauffé jusqu'à son point d'ébullition, ne dissout pas le composant polymère en donnant une solution homogène et pour lequel la température de démixtion d'un système constitué de 25 % en poids du composant polymère, 10 % en poids du faible non-solvant et 65 % en poids du composé A employé comme solvant est supérieure d'au plus 8 % à la température de démixtion d'un système constitué de 25 % en poids du composant polymère et 75 % en poids du composé A, et **en ce que**, pour refroidir le corps moulé, on le met en contact avec un milieu réfrigérant liquide qui est un non-solvant du composant polymère, qui, chauffé jusqu'à son point d'ébullition, ne dissout pas le composant polymère en donnant une solution homogène, et qui ne réagit pas chimiquement avec le composant polymère.

2. Procédé conforme à la revendication 1, **caractérisé en ce que** le milieu réfrigérant est un liquide qui est un fort non-solvant du composant polymère, pour lequel la température de démixtion d'un système constitué de 25 % en poids du composant polymère, 10 % en poids du fort non-solvant et 65 % en poids du composé A employé comme solvant est supérieure d'au moins 10 % à la température de démixtion d'un système constitué de 25 % en poids du composant polymère et 75 % en poids du composé A.

3. Procédé conforme à l'une ou plusieurs des revendications 1 et 2, **caractérisé en ce que**, à la température de réfrigération, le milieu réfrigérant est un liquide homogène monophasique.

4. Procédé conforme à l'une ou plusieurs des revendications 1 à 3, **caractérisé en ce que** le milieu réfrigérant se trouve à une température inférieure d'au moins 100 °C à la température critique de démixtion.

5. Procédé conforme à l'une ou plusieurs des revendications 1 à 4, **caractérisé en ce que** l'on dissout de 30 à 60 % en poids de composant polymère dans 70 à 40 % en poids du système solvant.

6. Procédé conforme à l'une ou plusieurs des revendications 1 à 5, **caractérisé en ce que** ledit polymère au nombre d'au moins un, constituant le composant polymère, est une polyoléfine exclusivement constituée de carbone et d'hydrogène.

7. Procédé conforme à la revendication 6, **caractérisé en ce que** ladite polyoléfine au nombre d'au moins une est un poly(4-méthyl-1-pentène).

8. Procédé conforme à la revendication 6, **caractérisé en ce que** ladite polyoléfine au nombre d'au moins une est un polypropylène.

9. Procédé conforme à la revendication 6, **caractérisé en ce que** ladite polyoléfine au nombre d'au moins une est un mélange d'un poly(4-méthyl-1-pentène) et d'un polypropylène.

10. Procédé conforme à la revendication 7, **caractérisé en ce que** l'on emploie comme composé A de l'adipate de dioctyle, du myristate d'isopropyle, de l'éther diphénylique, de l'éther dibenzylique, ou un mélange de ces composés.

11. Procédé conforme à la revendication 7, **caractérisé en ce que** l'on emploie comme composé B du triacétate de glycérol, du phtalate de diéthyle, de l'huile de ricin, de la N,N-bis(2-hydroxyéthyl)-amine grasse de suif, de l'huile de soja, ou un mélange de ces composés.

12. Procédé conforme à la revendication 8, **caractérisé en ce que** l'on emploie comme composé A de l'adipate de dioctyle, du myristate d'isopropyle, ou un mélange de ces composés.

13. Procédé conforme à la revendication 8, **caractérisé en ce que** l'on emploie comme composé B du phtalate de diéthyle, du triacétate de glycérol, de l'huile de ricin, du diacétate de glycérol, ou un mélange de ces composés.

14. Procédé, conforme à l'une ou plusieurs des revendications 1 à 13, de fabrication d'une membrane en fibres creuses.

15. Membrane hydrophobe asymétrique formée d'une seule pièce, destinée en particulier à l'échange de gaz, qui est essentiellement composée d'au moins un polymère choisi dans l'ensemble des polyoléfines et qui présente une première surface et une deuxième surface, cette membrane comportant une couche de soutien de structure microporeuse, à pores ouverts et de type éponge, et en position adjacente à cette couche de soutien sur au moins l'une de ses surfaces, une couche séparatrice de structure plus dense, **caractérisée en ce que** la couche séparatrice présente tout au plus des pores dont le diamètre moyen est inférieur à 100 nm, **en ce que** la couche de soutien ne comporte pas de macrovides et que les pores présents dans cette couche de soutien sont en moyenne sensiblement isotropes, et **en ce que** cette membrane présente une porosité qui vaut de plus de 30 % en volume à moins de 75 % en volume et un facteur de séparation de gaz $\alpha(CO_2/N_2)$ d'au moins 1.

16. Membrane conforme à la revendication 15, **caractérisée en ce que** cette membrane présente du côté de sa première surface une couche séparatrice et **en ce que** la deuxième surface, du côté opposé de la couche de soutien, possède une structure de type réseau, à pores ouverts, dont les ouvertures sont de forme approximativement circulaire.

17. Membrane conforme à l'une ou plusieurs des revendications 15 et 16, **caractérisée en ce que** la structure de la membrane change brusquement lors de la transition de la couche séparatrice à la couche de soutien.

18. Membrane conforme à l'une ou plusieurs des revendications 15 à 17, **caractérisée en ce que** le facteur de séparation de gaz $\alpha(CO_2/N_2)$ vaut au moins 2.

19. Membrane conforme à l'une ou plusieurs des revendications 15 à 18, **caractérisée en ce que** l'épaisseur de la couche séparatrice vaut de 0,01 à 5 $\mu$m.

20. Membrane conforme à la revendication 19, **caractérisée en ce que** l'épaisseur de la couche séparatrice vaut de 0,1 à 2 $\mu$m.

21. Membrane conforme à l'une ou plusieurs des revendications 15 à 20, **caractérisée en ce que** la porosité vaut de plus de 50 % en volume à moins de 75 % en volume.

22. Membrane conforme à l'une ou plusieurs des revendications 15 à 21, **caractérisée en ce que** la membrane présente un temps de percement par plasma d'au moins 20 heures.

23. Membrane conforme à la revendication 22, **caractérisée en ce que** le temps de percement par plasma vaut au moins 48 heures.

24. Membrane conforme à l'une ou plusieurs des revendications 15 à 23, **caractérisée en ce que** ledit polymère au nombre d'au moins un est une polyoléfine exclusivement constituée de carbone et d'hydrogène.

25. Membrane conforme à la revendication 24, **caractérisée en ce que** la polyoléfine est un poly(4-méthyl-1-pentène).

26. Membrane conforme à la revendication 24, **caractérisée en ce que** la polyoléfine est un polypropylène.

27. Membrane conforme à la revendication 24, **caractérisée en ce que** la membrane est constituée pour l'essentiel d'un mélange d'un poly(4-méthyl-1-pentène) et d'un polypropylène.

28. Membrane conforme à l'une ou plusieurs des revendications 15 à 27, **caractérisée en ce que** la membrane présente un flux de gaz $Q(CO_2)$ d'au moins 5 ml/(cm$^2$.min.bar).

29. Membrane conforme à l'une ou plusieurs des revendications 15 à 28, **caractérisée en ce qu'**il s'agit d'une membrane en fibres creuses.

30. Membrane conforme à l'une ou plusieurs des revendications 15 à 29, que l'on peut fabriquer en opérant selon un procédé conforme à l'une ou plusieurs des revendications 1 à 14.

31. Emploi d'une membrane conforme à l'une ou plusieurs des revendications 15 à 30 pour un transfert de gaz.

32. Emploi d'une membrane conforme à l'une ou plusieurs des revendications 15 à 30 pour l'oxygénation de sang.

Fig. 1

Fig. 2

Fig. 3

Fig. 4

Fig. 5

Fig. 6

Fig. 7

Fig. 8

Fig. 9

020823 5.0 kV                450nm

**Fig. 10**

020820 5.0 kV                2.00μm

**Fig. 11**

020825 5.0 kV                2.00μm

**Fig. 12**

Fig. 13

Fig. 14

**Fig. 15**

**Fig. 16**

Fig. 17

Fig. 18

Fig. 19

Fig. 20